(19) Europäisches Patentamt
European Patent Office
Office européen des brevets

(11) EP 3 790 739 B1

(12) # EUROPÄISCHE PATENTSCHRIFT

(45) Veröffentlichungstag und Bekanntmachung des Hinweises auf die Patenterteilung:
**20.04.2022 Patentblatt 2022/16**

(21) Anmeldenummer: **19722602.0**

(22) Anmeldetag: **06.05.2019**

(51) Internationale Patentklassifikation (IPC):
***B41M 5/333** (2006.01)* ***B41M 5/327** (2006.01)*
***B41M 5/337** (2006.01)*

(52) Gemeinsame Patentklassifikation (CPC):
**B41M 5/3333;** B41M 5/3275; B41M 5/3375

(86) Internationale Anmeldenummer:
**PCT/EP2019/061582**

(87) Internationale Veröffentlichungsnummer:
**WO 2019/215099 (14.11.2019 Gazette 2019/46)**

(54) **WÄRMEEMPFINDLICHES AUFZEICHNUNGSMATERIAL**
HEAT-SENSITIVE RECORDING MATERIAL
MATÉRIAU D'IMPRESSION THERMOSENSIBLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.05.2018 DE 102018111224**

(43) Veröffentlichungstag der Anmeldung:
**17.03.2021 Patentblatt 2021/11**

(73) Patentinhaber: **Papierfabrik August Koehler SE**
**77704 Oberkirch (DE)**

(72) Erfinder:
- **HORN, Michael**
**77654 Offenburg (DE)**
- **STALLING, Timo**
**77767 Appenweier (DE)**
- **ZIERINGER, Kerstin**
**77855 Achern (DE)**

(74) Vertreter: **Held, Stephan**
**Meissner Bolte Patentanwälte**
**Rechtsanwälte Partnerschaft mbB**
**Widenmayerstraße 47**
**80538 München (DE)**

(56) Entgegenhaltungen:
**WO-A1-01/66515** **JP-A- H1 095 171**
**JP-A- H10 217 613**

EP 3 790 739 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein wärmeempfindliches Aufzeichnungsmaterial, umfassend ein Trägersubstrat sowie eine mindestens einen Farbbildner und mindestens einen phenolfreien Farbentwickler enthaltende wärmeempfindliche farbbildende Schicht, sowie die Verwendung des phenolfreien Farbentwicklers in einem wärmeempfindlichen Aufzeichnungsmaterial.

Wärmeempfindliche Aufzeichnungsmaterialien (Thermopapiere) für die Thermodirekt-Druckanwendung, die eine auf einem Trägersubstrat aufgebrachte wärmeempfindliche farbbildende Schicht (Thermoreaktionsschicht) aufweisen, sind seit langem bekannt.

In der wärmeempfindlichen farbbildenden Schicht liegen üblicherweise ein Farbbildner und ein Farbentwickler vor, die unter Wärmeeinwirkung miteinander reagieren und so zu einer Farbentwicklung führen. Weit verbreitet sind preisgünstige phenolische Farbentwickler (Bisphenol A, Bisphenol S, etc.), mit welchen wärmeempfindliche Aufzeichnungsmaterialien erhalten werden können, die für zahlreiche Anwendungen ein akzeptables Leistungsprofil aufweisen. Ebenfalls bekannt sind wärmeempfindliche Aufzeichnungsmaterialien, die in der wärmeempfindlichen farbbildenden Schicht einen nicht-phenolischen Farbentwickler enthalten.

Diese wurden entwickelt, um die Beständigkeit des Schriftbildes zu verbessern, insbesondere auch dann, wenn das bedruckte wärmeempfindliche Aufzeichnungsmaterial über längere Zeit bei höheren Temperaturen und/oder Luftfeuchtigkeit gelagert wird. Insbesondere vor dem Hintergrund der öffentlichen Diskussionen über das toxische Potenzial bis-phenolischer Chemikalien ist das Interesse an nicht-phenolischen Farbentwicklern stark angestiegen. Hierbei war es Ziel, die Nachteile der bis-phenolischen Farbentwickler zu vermeiden, allerdings sollten die technischen Leistungseigenschaften, die mit phenolischen Farbentwicklern erzielt werden können, zumindest beibehalten, vorzugsweise aber verbessert werden.

Der sehr umfangreiche Stand der Technik zu nicht-phenolischen Entwicklerstoffen lässt trotz der großen chemischen Diversität dieser Stoffe gemeinsame strukturelle Merkmale erkennen.

So ist eine 1,3-disubstituierte (Thio)Ureido-Substruktur (Y-NH-C(X)-NH-Z mit X = S oder O) ein gemeinsames Merkmal zahlreicher nicht-phenolischer Klassen von Farbentwicklern. Durch passende Wahl der Gruppen Y und Z können die für die Eignung als Farbentwickler relevanten funktionellen Eigenschaften moduliert werden.

Große Verbreitung haben Farbentwickler mit Sulfonyl-Harnstoff-Strukturen (Y = $SO_2$, X = O in obiger Formel) erfahren, da diese relativ leicht herstellbar sind, und die mit ihnen hergestellten wärmeempfindlichen Aufzeichnungsmaterialien gute anwendungstechnische Eigenschaften aufweisen.

Die EP 0526072 A1 und die EP 0 620 122 B1 beschreiben Farbentwickler aus der Klasse der aromatischen Sulfonyl-(thio)Harnstoffe. Mit diesen können wärmeempfindliche Aufzeichnungsmaterialien erhalten werden, die sich durch eine relativ hohe Bildbeständigkeit auszeichnen. Ferner weisen die auf diesen Farbentwicklern basierenden wärmeempfindlichen Aufzeichnungsmaterialien eine brauchbare thermische Druckempfindlichkeit bei guter Oberflächenweiße auf, so dass es bei entsprechender Gestaltung der Rezeptur der wärmeempfindlichen farbbildenden Schicht vergleichsweise leicht möglich ist, hohe Druckdichten unter Verwendung handelsüblicher Thermodrucker zu erzeugen.

Die WO 0 035 679 A1 offenbart aromatische und heteroaromatische Sulfonyl(thio)harnstoffverbindungen (X = S oder O) und/oder Sulfonyl-Guanidine (X = NH) der Formel Ar'-$SO_2$-NH-C(X)-NH-Ar, wobei Ar durch eine zweiwertige Linkergruppe an weitere aromatische Gruppen geknüpft ist. Ein in der Praxis weit verbreiteter nicht-phenolischer Farbentwickler aus dieser Klasse, 4-Methyl-*N*-[[[3-[[[4-methylphenyl]sulfonyl]oxy]phenyl]amino]carbonyl]benzolsulfonamid (Handelsname Pergafast 201®, BASF) zeichnet sich durch die Ausgewogenheit der anwendungstechnischen Eigenschaften der mit diesem Farbentwickler hergestellten wärmeempfindlichen Aufzeichnungsmaterialien aus. Insbesondere besitzen diese eine gute dynamische Ansprechempfindlichkeit und eine im Vergleich zu mit (bis)phenolischen Farbentwicklerstoffen erhaltenen Aufzeichnungsmaterialien hohe Beständigkeit des Ausdrucks bei Lagerung unter harschen Umweltbedingungen oder gegenüber hydrophoben Stoffen.

Jede Neuentwicklung muss sich mit dem Leistungsspektrum dieses etablierten nicht-phenolischen Farbentwicklers messen lassen.

Sulfonylharnstoffe neigen in Gegenwart von Wasser/Feuchtigkeit und in der Wärme zu hydrolytischen Zersetzungsreaktionen (M. Eckhardt, T.J. Simat, Chemosphere, 186, 1016 (2017)). Dies führt dazu, dass wärmeempfindliche Aufzeichnungsmaterialien auf Basis der Sulfonylharnstoff-Chemie bei Lagerung im unbedruckten Zustand unter Bedingungen erhöhter Luftfeuchtigkeit und/oder Temperatur eine teilweise Zersetzung des Farbentwicklers erfahren können.

Da die Schreibleistung (dynamische Ansprechempfindlichkeit) der wärmeempfindlichen Aufzeichnungsmaterialien auch von der Menge des in der wärmeempfindlichen Schicht vorliegenden Farbentwicklers abhängt, verliert ein über längere Zeiträume gelagertes wärmeempfindliches Aufzeichnungsmaterial einen Teil des Farbentwicklers und büßt dadurch teilweise seine Schreibleistung ein.

Die Möglichkeit der Modulation der Eigenschaften der 1,3-disubstituierten Sulfonyl-Harnstoffeinheit kann auch durch Einbezug von zur Sulfonyl-Ureido-Einheit in vorteilhafter konjugativer Verbundenheit stehenden Gruppierungen erreicht werden.

Dieser Ansatz wurde z.B. in der JP 1 126 37 69 A verfolgt. Diese offenbart Farbentwickler-Strukturen der allgemeinen Formel $(R^1\text{-}SO_2\text{-}NH\text{-}CO\text{-}NH\text{-}CO\text{-}NH\text{-})_n\text{-}\gamma$, worin $R^1$ ein Alkyl- oder Aryl-Rest sein kann, $n \geq 2$ ist und Y eine organische Gruppe (vornehmlich Diphenylmethan- oder Phenyl-Reste) mit einer Wertigkeit $n \geq 2$ ist.

Die JP 051 85 737 offenbart Farbentwickler der allgemeinen Formel $R^1\text{-}SO_2\text{-}NH\text{-}C(X)\text{-}NH\text{-}C(Y)\text{-}R^2$, worin $R^1$ eine aromatische Gruppe, $R^2$ ein Alkyl- oder Aryl-Rest sein kann und X und Y für Sauerstoff oder Schwefel stehen. Die JP H 10217613A offenbart ein wärmeempfindliches Aufzeichnungsmaterial mit einem phenolischen Biuret Derivat als Farbentwickler.

Aufgabe der vorliegenden Erfindung ist es, vorstehend geschilderte Nachteile des Standes der Technik zu beheben. Insbesondere besteht die Aufgabe der vorliegenden Erfindung darin, ein wärmeempfindliches Aufzeichnungsmaterial bereitzustellen, welches ein ausgewogenes anwendungstechnisches Eigenschaftsprofil aufweist und eine praxistaugliche Druckdichte erreicht, vergleichbar jener, die mit bekannten nicht-phenolischen Farbentwicklerstoffen möglich sind, dabei aber eine hohe Beständigkeit des Druckbildes, insbesondere unter erhöhter Umgebungstemperatur und Feuchte oder bei Lichteinwirkung sicherstellt, ohne auf spezielle Rezepturbestandteile in der wärmeempfindlichen farbbildende Schicht, wie Alterungsschutzmittel oder spezielle Schmelzhilfsmittel mit eingeschränkter Verfügbarkeit und hohem Preis, angewiesen zu sein.

Eine weitere Aufgabe der vorliegenden Erfindung ist es, ein wärmeempfindliches Aufzeichnungsmaterial zur Verfügung zu stellen, welches in der Lage ist, die anwendungstechnisch notwendigen funktionellen Eigenschaften (insbesondere die thermische Ansprechempfindlichkeit) auch bei Lagerung über längere Zeiträume und/oder unter extremen Klimabedingungen des unbedruckten wärmeempfindlichen Aufzeichnungsmaterials zu gewährleisten.

Erfindungsgemäß wird diese Aufgabe mit einem wärmeempfindlichen Aufzeichnungsmaterial nach Anspruch 1 gelöst, das ein Trägersubstrat sowie eine mindestens einen Farbbildner und mindestens einen phenolfreien Farbentwickler enthaltende wärmeempfindliche farbbildende Schicht umfasst, und dadurch gekennzeichnet ist, dass der mindestens eine Farbentwickler die Verbindung der Formel (A) ist,

$$Ar(NH\text{-}CO\text{-}NH\text{-}CO\text{-}NH\text{-}Ar^1)_n \qquad (A),$$

worin Ar ein unsubstituierter oder substituierter Phenyl- oder Naphthyl-Rest, $Ar^1$ ein unsubstituierter oder substituierter Phenyl-, Naphthyl-, Pyridyl-, Thiazolyl- oder Benzothiazolyl-Rest und n 1 oder 2 ist.

Überraschenderweise hat es sich gezeigt, dass es möglich ist, mit Farbentwicklern der Formel (A), welche keine Sulfonyl-Harnstoff-Einheiten enthalten, wärmeempfindliche Aufzeichnungsmaterialien zu erhalten, welche sich durch hervorragende Beständigkeit des Schriftbildes, insbesondere bei erhöhter Umgebungstemperatur und Feuchte oder bei Einwirken von Licht über einen längeren Zeitraum, auszeichnen, und mit denen eine gute Qualität des Druckbildes (hohe optische Dichte des Druckbildes) zu erreichen ist. Des Weiteren ist die Langzeitlagerfähigkeit der erfindungsgemäßen wärmeempfindlichen Aufzeichnungsmaterialien überragend. Bei Lagerung im unbedruckten Zustand über mehrere Wochen bei hohen Umgebungsfeuchten und/oder Temperaturen leidet die erzielte optische Dichte beim Bedrucken im Thermodrucker kaum.

Auch ist die Temperatur, ab welcher sich das weiße erfindungsgemäße wärmeempfindliche Aufzeichnungsmaterial mit den Farbentwicklern der Formel (A) merklich vergraut, signifikant höher als bei den Vergleichspapieren mit bekannten Farbentwicklern (wünschenswerte hohe Starttemperatur).

Vorzugsweise ist n 1, da diese Verbindungen besonders leicht herzustellen sind.

Vorzugsweise ist Ar ein unsubstituierter oder substituierter Phenyl-Rest.

Besonders bevorzugt ist Ar ein mit einem $C_1$-$C_4$-Alkyl-, einem Alkenyl-, einem Alkinyl-, einem Benzyl-, einem Halogen-, einem $NO_2$-, einem CN-, einem Formyl-, einem ROC-, einem RO-, einem $RO_2C$-, einem ROCO-, einem R-$SO_2O$-, einem RO-$SO_2$-, einem RNHCO-, einem RCONH-, einem R-NH-$SO_2$- oder einem R-$SO_2$-NH-Rest substituierter Phenyl-Rest ist, wobei R ein $C_1$-$C_4$-Alkyl-, ein Alkenyl-, ein Alkinyl-, ein Phenyl-, ein Tolyl- oder ein Benzyl-Rest ist. Diese Verbindungen lassen sich besonders leicht herstellen.

Ganz besonders bevorzugt ist Ar mit einem $C_1$-$C_4$-Alkyl-, einem Halogen-, einem $NO_2$-, einem ROC-, einem RO-, einem $RO_2C$- oder einem R-$SO_2$-NH-Rest substituierter Phenyl-Rest, wobei R ein $C_1$-$C_4$-Alkyl-Rest ist. Diese Verbindung sind leicht und kostengünstig herstellbar.

Insbesondere ist Ar ein unsubstituierter Phenyl-, ein 4-Acetyl-Phenyl-, ein 3-Chlor-Phenyl- oder ein 4-Methoxy-Phenyl-Rest. Diese Verbindungen sind besonders leistungsfähig.

Vorzugsweise ist $Ar^1$ ein mit einem $C_1$-$C_4$-Alkyl-, einem Alkenyl-, einem Alkinyl-, einem Benzyl-, einem Halogen-, einem $NO_2$-, einem CN-, einem Formyl-, einem $R^1OC$-, einem $R^1O$-, einem $R^1O_2C$-, einem $R^1OCO$-, einem $R^1$-$SO_2O$-, einem $R^1O$-$SO_2$-, einem $R^1NHCO$-, einem $R^1CONH$-, einem $R^1$-NH-$SO_2$- oder einem $R^1$-$SO_2$-NH-Rest substituierter Phenyl-Rest, wobei ein $C_1$-$C_4$-Alkyl-, ein Alkenyl-, ein Alkinyl-, ein Phenyl-, ein Tolyl-, ein Benzyl-, ein Thiazolyl-, ein Benzothiazolyl- oder ein Pyrimidyl-Rest ist. Diese Verbindungen sind leicht herstellbar.

Besonders bevorzugt ist, dass $Ar^1$ ein mit einem $C_1$-$C_4$-Alkyl-, einem Halogen-, einem $R^1OC$-, einem $R^1O$-, einem $R^1O_2C$-, einem $R^1OCO$-, einem $R^1$-$SO_2O$-, einem $R^1O$-$SO_2$-, einem $R^1$-$SO_2$-NH-Rest substituierter Phenyl-Rest

ist, wobei ein $C_1$-$C_4$-Alkyl-, ein Phenyl-, ein Tolyl-, ein Thiazolyl- oder ein Pyrimidyl-Rest ist. Diese Verbindungen sind leicht und kostengünstig herstellbar.

Ganz besonders bevorzugt ist $Ar^1$ ein mit einem $R^1O$-$SO_2$- oder einem $R^1SO_2O$-Rest substituierter Phenyl-Rest. Diese Verbindungen sind besonders leistungsfähig. Der Phenyl-Rest ist vorzugsweise in 3- oder 4-Stellung substituiert. Derartige Verbindungen sind besonders leistungsfähig.

Besonders bevorzugte Verbindungen der Formel (A) sind in folgender Tabelle 1 dargestellt.

Tabelle 1: Bevorzugte Verbindungen der Formel (A) mit den angegebenen Bedeutungen für Ar, $Ar^1$ und n (R und = wie vorstehend erwähnt)

| Ar | $Ar^1$ | n |
|---|---|---|
| Phenyl- | Phenyl- | 1 |
| Phenyl- | $C_1$-$C_4$-Alkylsubstituierter Phenyl- | 1 |
| Phenyl- | Halogensubstituierter Phenyl- | 1 |
| Phenyl- | $R^1O$-substituierter Phenyl- | 1 |
| Phenyl- | $R^1OC$-substituierter Phenyl- | 1 |
| Phenyl- | $NO_2$-substituierter Phenyl- | 1 |
| Phenyl- | $R^1O_2C$-substituierter Phenyl- | 1 |
| Phenyl- | $R^1OCO$-substituierter Phenyl- | 1 |
| Phenyl- | $R^1$-$OSO_2$-substituierter Phenyl- | 1 |
| Phenyl- | $R^1$-$SO_2O$-Substituierter Phenyl- | 1 |
| Phenyl- | $R^1$-$SO_2NH$-substituierter Phenyl- | 1 |
| Phenyl- | Naphthyl- | 1 |
| Phenyl- | Thiazolyl- | 1 |
| Phenyl- | Benzothiazolyl- | 1 |
| Phenyl- | Pyridyl- | 1 |
| ROC - substituierter Phenyl- | $R^1OC$-substituierter Phenyl- | 1 |
| ROC - substituierter Phenyl- | $R^1$-$SO_2O$-substituierter Phenyl- | 1 |
| ROC - substituierter Phenyl- | $R^1$-$OSO_2$-substituierter Phenyl- | 1 |
| RO - substituierter Phenyl- | $R^1$-$OSO_2$-substituierter Phenyl- | 1 |
| Halogensubstituierter Phenyl- | $R^1$-$OSO_2$-substituierter Phenyl- | 1 |
| Phenyl- | Phenyl- | 2 |

Die Verbindung der Formel (A) liegt vorzugsweise in einer Menge von etwa 3 bis etwa 35 Gew.-%, besonders bevorzugt in einer Menge von etwa 10 bis etwa 25 Gew.-%, bezogen auf den gesamten Feststoffgehalt der wärmeempfindlichen Schicht, vor.

Die Herstellung der Verbindung der Formel (A) kann nach an sich bekannten Methoden erfolgen.

Reaktionsschema 1 veranschaulicht einen möglichen Syntheseweg für die Verbindung der Formel (A) am Beispiel der Verbindungen I-XXIX (siehe Tabelle 2).

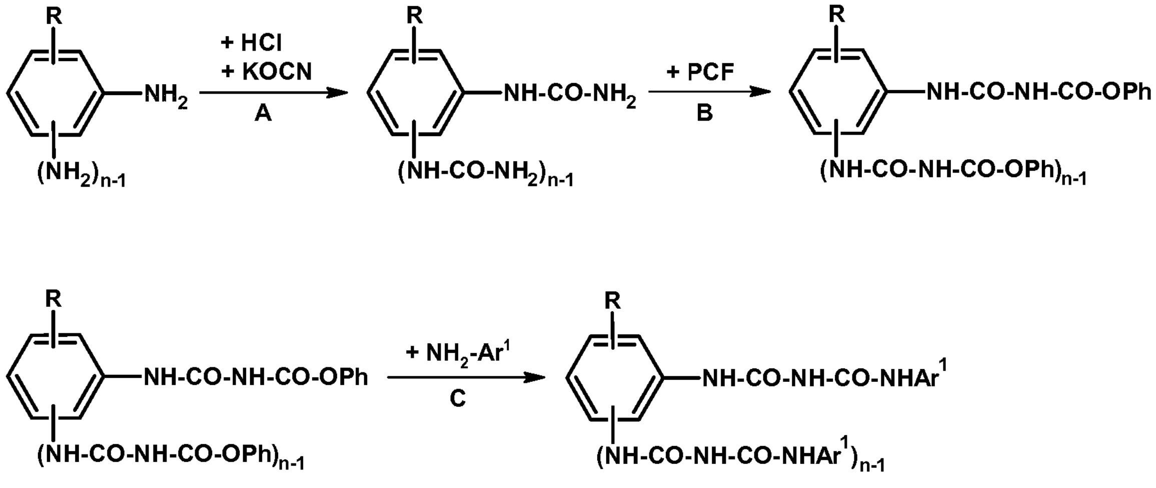


I-XXIX

Reaktionsschema 1 ($Ar^1$, n: siehe Tabelle 2; R = H, 3-Cl, 4-$CH_3O$, 4-$CH_3CO$)

Die Auswahl des Trägersubstrates ist nicht kritisch. Allerdings ist es bevorzugt, als Trägersubstrat Papier, synthetisches Papier und/oder eine Kunststoff-Folie einzusetzen.

Gegebenenfalls liegt zwischen dem Trägersubstrat und der wärmeempfindlichen Schicht mindestens eine weitere Zwischenschicht vor, wobei dieser Zwischenschicht die Aufgabe zukommt, die Oberflächenglätte des Trägers für die wärmeempfindliche Schicht zu verbessern und eine Wärmebarriere zwischen dem Trägerpapier und der wärmeempfindlichen Schicht zu realisieren. Vorzugsweise kommen in dieser Zwischenschicht organische Hohlkugelpigmente und/oder kalzinierte Kaoline zum Einsatz.

Auch kann mindestens eine oberhalb der wärmeempfindlichen Schicht angeordnete Schutzschicht und/oder mindestens eine die Bedruckbarkeit begünstigende Schicht im erfindungsgemäßen wärmeempfindlichen Aufzeichnungsmaterial vorliegen, wobei diese Schichten auf der Vorder- oder Rückseite des Substrats aufgebracht werden können.

Hinsichtlich der Wahl des Farbbildners unterliegt die vorliegende Erfindung ebenfalls keinen wesentlichen Einschränkungen. Bevorzugt ist der Farbbildner jedoch ein Farbstoff vom Triphenylmethan-Typ, vom Fluoran-Typ, vom Azaphthalid-Typ und/oder vom Fluoren-Typ. Ein ganz besonders bevorzugter Farbbildner ist ein Farbstoff vom Fluoran-Typ, da er dank der Verfügbarkeit und der ausgewogenen anwendungsbezogenen Eigenschaften die Bereitstellung eines wäremeempfindlichen Aufzeichnungsmaterials mit einem attraktiven Preis-Leistungsverhältnis ermöglicht.

Besonders bevorzugte Farbstoffe vom Fluoran-Typ sind:

3-Diethylamino-6-methyl-7-anilinofluoran,
3-(*N*-Ethyl-*N*-4-toludinamino)-6-methyl-7-anilinofluoran,
3-(*N*-Ethyl-*N*-isoamylamino)-6-methyl-7-anilinofluoran,
3-Diethylamino-6-methyl-7-(2,4-dimethylanilino)fluoran,
3-Pyrrolidino-6-methyl-7-anilinofluoran,
3-(Cyclohexyl-*N*-methylamino)-6-methyl-7-anilinofluoran,
3-Diethylamino-7-(3-trifluoromethylanilino)fluoran,
3-*N*-n-Dibutylamino-6-methyl-7-anilinofluoran,
3-Diethylamino-6-methyl-7-(3-methylanilino)fluoran,
3-*N*-n-Dibutylamino-7-(2-chloranilino)fluoran,
3-(*N*-Ethyl-*N*-tetrahydrofurfurylamino)-6-methyl-7-anilinofluoran,
3-(*N*-Methyl-*N*-propylamino)-6-methyl-7-anilinofluoran,
3-(*N*-Ethyl-*N*-ethoxypropylamino)-6-methyl-7-anilinofluoran,
3-(*N*-Ethyl-*N*-isobutylamino)-6-methyl-7-anilinofluoran und/oder
3-Dipentylamino-6-methyl-7-anilinofluoran.

Der Farbbildner kann als Einzelstoff, aber auch als Gemisch zweier oder mehrerer Farbbildner zur Anwendung kommen, vorausgesetzt, die wünschenswerten anwendungstechnischen Eigenschaften der Aufzeichnungsmaterialien leiden darunter nicht.

Der Farbbildner liegt vorzugsweise in einer Menge von etwa 5 bis etwa 30 Gew.-%, besonders bevorzugt in einer Menge von etwa 8 bis etwa 20 Gew.-%, bezogen auf den gesamten Feststoffgehalt der wärmeempfindlichen

Schicht, vor.

Zur Steuerung spezieller anwendungstechnischer Eigenschaften kann es vorteilhaft sein, dass mindestens zwei der unter die allgemeine Formel (A) fallenden Verbindungen als Farbentwickler in der wärmeempfindlichen farbbildenden Schicht vorliegen.

Desgleichen können ein oder mehrere weitere (bis)phenolische oder nicht-phenolische Farbentwickler zusätzlich zu der oder den Verbindung(en) der Formel (A) in der wärmeempfindlichen farbbildenden Schicht vorliegen.

Neben dem mindestens einem Farbbildner und dem mindestens einem Farbentwickler können in der wärmeempfindlichen farbbildenden Schicht ein oder mehrere Sensibilisierungsmittel, auch thermische Lösungsmittel oder Schmelzhilfsmittel genannt, vorliegen, was den Vorteil hat, dass die Steuerung der thermischen Druckempfindlichkeit leichter zu realisieren ist.

Generell kommen als Sensibilisierungsmittel vorteilhafterweise kristalline Stoffe in Betracht, deren Schmelzpunkt zwischen etwa 90 und etwa 150 °C liegt und die im geschmolzenen Zustand die farbbildenden Komponenten (Farbbildner und Farbentwickler) lösen, ohne die Ausbildung des Farbkomplexes zu stören.

Vorzugsweise ist das Sensibilisierungsmittel ein Fettsäureamid, wie Stearamid, Beheneamid oder Palmitamid, ein Ethylen-bis-Fettsäureamid, wie *N*,*N*'-Ethylen-bis-stearinsäureamid oder *N*,*N*'-Ethylen-bis-ölsäureamid, ein Fettsäurealkanolamid, wie *N*-(Hydroxymethyl)stearamid, *N*-Hydroxymethylpalmitamid oder Hydroxyethylstearamid, ein Wachs, wie Polyethylenwachs oder Montanwachs, ein Carbonsäureester, wie Dimethylterephthalat, Dibenzylterephthalat, Benzyl-4-benzyloxybenzoat, Di-(4-methylbenzyl)oxalat, Di-(4-chlorbenzyl)oxalat oder Di-(4-benzyl)oxalat, ein Keton, wie 4-Acetylbiphenyl, ein aromatischer Ether, wie 1,2-Diphenoxy-ethan, 1,2-Di-(3-methylphenoxy)ethan, 2-Benzyloxynaphthalin, 1,2-Bis-(phenoxymethyl)benzol oder 1,4-Diethoxynaphthalin, ein aromatisches Sulfon, wie Diphenylsulfon, und/oder ein aromatisches Sulfonamid, wie 4-Toluolsulfonamid, Benzolsulfonanilid oder *N*-Benzyl-4-toluolsulfonamid, oder aromatische Kohlenwasserstoffe, wie 4-Benzylbiphenyl.

Das Sensibilisierungsmittel liegt vorzugsweise in einer Menge von etwa 10 bis etwa 40 Gew.-%, besonders bevorzugt in einer Menge von etwa 15 bis etwa 25 Gew.-%, bezogen auf den gesamten Feststoffgehalt der wärmeempfindlichen Schicht, vor.

In einer weiteren bevorzugten Ausführungsform liegt neben dem Farbbildner, dem phenolfreien Farbentwickler und gegebenenfalls dem Sensibilisierungsmittel mindestens ein Stabilisator (Alterungsschutzmittel) in der wärmeempfindlichen farbbildenden Schicht vor.

Bei dem Stabilisator handelt es sich vorzugsweise um sterisch gehinderte Phenole, besonders bevorzugt um 1,1,3-Tris-(2-methyl-4-hydroxy-5-cyclohexyl-phenyl)-butan, 1,1,3-Tris-(2-methyl-4-hydroxy-5-tert-butylphenyl)-butan, 1,1-Bis-(2-methyl-4-hydroxy-5-tert-butyl-phenyl)-butan.

Auch Harnstoff-Urethan-Verbindungen (beispielhaft Handelsprodukt UU) oder vom 4,4'-Dihydroxydiphenylsulfon abgeleitete Ether, wie 4-Benzyloxy-4'-(2-methylglycidyloxy)-diphenylsulfon (Handelsname NTZ-95®, Nippon Soda Co. Ltd.), oder oligomere Ether (Handelsname D90®, Nippon Soda Co. Ltd.) sind als Stabilisatoren im erfindungsgemäßen Aufzeichnungsmaterial einsetzbar.

Der Stabilisator liegt vorzugsweise in einer Menge von etwa 0,2 bis 0,5 Gew.-Teilen, bezogen auf den mindestens einen phenolfreien Farbentwickler der Verbindung der Formel (A), vor.

In einer weiteren bevorzugten Ausführungsform liegt in der wärmeempfindlichen farbbildenden Schicht mindestens ein Bindemittel vor. Bei diesem handelt es sich vorzugsweise um wasserlösliche Stärken, Stärkederivate, stärkebasierte Biolatices vom EcoSphere®-Typ, Methylcellulose, Hydroxyethylcellulose, Carboxymethylcellulosen, partiell oder vollständig verseifte Polyvinylalkohole, chemisch modifizierte Polyvinylalkohole oder StyrolmaleinsäureanhydridCopolymere, Styrolbutadien-Copolymere, Acrylamid-(Meth)acrylat-Copolymere, Acrylamid-Acrylat-Methacrylat-Terpolymere, Polyacrylate, Poly(meth)-acrylsäureester, Acrylat-Butadien-Copolymere, Polyvinylacetate und/oder Acrylnitril-Butadien-Copolymere.

Das Bindemittel liegt vorzugsweise in einer Menge von etwa 5 bis 40 Gew.-%, besonders bevorzugt in einer Menge von etwa 8 bis 25 Gew.-%, bezogen auf den gesamten Feststoffgehalt der wärmeempfindlichen Schicht, vor.

In einer weiteren bevorzugten Ausführungsform liegt mindestens ein Trennmittel (Antihaftmittel) oder Gleitmittel in der wärmeempfindlichen farbbildenden Schicht vor. Bei diesen Mitteln handelt es sich vorzugsweise um Fettsäure-Metallsalze, wie z. B. Zinkstearat oder Calciumstearat, oder auch Behenatsalze, synthetische Wachse, z. B. in Form von Fettsäureamiden, wie z. B. Stearinsäureamid und Behensäureamid, Fettsäurealkanolamide, wie z. B. Stearinsäuremethylolamid, Paraffinwachse verschiedener Schmelzpunkte, Esterwachse unterschiedlicher Molekulargewichte, Ethylenwachse und Propylenwachse unterschiedlicher Härten und/oder natürliche Wachse, wie z. B. Carnaubawachs oder Montanwachs.

Das Trennmittel liegt vorzugsweise in einer Menge von etwa 1 bis etwa 10 Gew.-%, besonders bevorzugt in einer Menge von etwa 3 bis etwa 6 Gew.-%, bezogen auf den gesamten Feststoffgehalt der wärmeempfindlichen Schicht, vor.

In einer weiteren bevorzugten Ausführungsform enthält die wärmeempfindliche farbbildende Schicht Pigmente. Der Einsatz dieser hat unter anderem den Vorteil, dass diese auf ihrer Oberfläche die im thermischen Druckprozess

entstehende Chemikalien-Schmelze fixieren können. Auch kann über Pigmente die Oberflächenweiße und Opazität der wärmeempfindlichen farbbildenden Schicht und deren Bedruckbarkeit mit konventionellen Druckfarben gesteuert werden. Schließlich besitzen Pigmente eine "Extenderfunktion", beispielsweise für die relativ teuren farbgebenden Funktionschemikalien.

Besonders geeignete Pigmente sind anorganische Pigmente, sowohl synthetischer als auch natürlicher Herkunft, vorzugsweise Clays, gefällte oder natürliche Calciumcarbonate, Aluminiumoxide, Aluminiumhydroxide, Kieselsäuren, gefällte und pyrogene Kieselsäuren (z. B. Aerodisp®- Typen), Diathomeenerden, Magnesiumcarbonate, Talk, aber auch organische Pigmente, wie Hohlpigmente mit einer Styrol/Acrylat-Copolymer-Wand oder Harnstoff/Formaldehyd-Kondensationspolymere. Diese können alleine oder in beliebigen Mischungen verwendet werden.

Die Pigmente liegen vorzugsweise in einer Menge von etwa 20 bis etwa 50 Gew.-%, besonders bevorzugt in einer Menge von etwa 30 bis etwa 40 Gew.-%, bezogen auf den gesamten Feststoffgehalt der wärmeempfindlichen Schicht, vor.

Zum Steuern der Oberflächenweiße des erfindungsgemäßen wärmeempfindlichen Aufzeichnungsmaterials können optische Aufheller in die wärmeempfindliche farbbildende Schicht eingebaut werden. Bei diesen handelt es sich vorzugsweise um Stilbene.

Um bestimmte streichtechnische Eigenschaften zu verbessern, ist es im Einzelfall bevorzugt, zu den zwingenden Bestandteilen des erfindungsgemäßen wärmeempfindlichen Aufzeichnungsmaterials weitere Bestandteile, insbesondere Rheologie-Hilfsmittel, wie z. B. Verdicker und/oder Tenside, hinzuzufügen.

Das Flächenauftragsgewicht der (trockenen) wärmeempfindlichen Schicht beträgt vorzugsweise etwa 1 bis etwa 10 $g/m^2$, bevorzugt etwa 3 bis etwa 6 $g/m^2$.

In einer besonders bevorzugten Ausführungsform handelt es sich bei dem wärmeempfindlichen Aufzeichnungsmaterial um ein solches nach Anspruch 1, bei dem als Farbbildner ein Farbstoff vom Fluoran-Typ eingesetzt wird und zusätzlich ein Sensibilisierungsmittel, ein Gleitmittel, ein Pigment und/oder ein Binder vorliegt. Ganz besonders bevorzugt liegen ein Sensibilisierungsmittel, ein Gleitmittel, ein Pigment und ein Binder zusammen vor.

Das erfindungsgemäße wärmeempfindliche Aufzeichnungsmaterial lässt sich mit bekannten Herstellungsverfahren gewinnen.

Es ist jedoch bevorzugt, das erfindungsgemäße Aufzeichnungsmaterial mit einem Verfahren zu gewinnen, bei dem auf ein Trägersubstrat eine die Ausgangsmaterialien der wärmeempfindlichen farbbildenden Schicht enthaltende wässrige Suspension aufgetragen und getrocknet wird, wobei die wässrige Auftragssuspension einen Feststoffgehalt von etwa 20 bis etwa 75 Gew.-%, bevorzugt von etwa 30 bis etwa 50 Gew.%, aufweist, und mit dem Curtain-Coating-Beschichtungsverfahren bei einer Betriebsgeschwindigkeit der Streichanlage von mindestens etwa 400 m/min aufgetragen und getrocknet wird.

Dieses Verfahren ist insbesondere unter wirtschaftlichen Gesichtspunkten vorteilhaft.

Wird der Wert des Feststoffgehaltes von etwa 20 Gew.-% unterschritten, dann verschlechtert sich die Wirtschaftlichkeit, da eine große Menge von Wasser aus dem Strich durch schonende Trocknung in kurzer Zeit entfernt werden muss, was sich nachteilig auf die Streichgeschwindigkeit auswirkt. Wird auf der anderen Seite der Wert von 75 Gew.-% überschritten, dann führt dies lediglich zu einem erhöhten technischen Aufwand, um die Stabilität des Streichfarben-Vorhangs während des Beschichtungsprozesses zu gewährleisten.

Beim Curtain-Coating-Beschichtungsverfahren (Vorhangbeschichtungsverfahren) wird ein frei fallender Vorhang einer Beschichtungsdispersion gebildet. Durch freien Fall wird die in Form eines dünnen Filmes (Vorhangs) vorliegende Beschichtungsdispersion auf ein Substrat "gegossen", um die Beschichtungsdispersion auf das Substrat aufzubringen. Die DE 10196052 T1 offenbart den Einsatz des Curtain-Coating-Beschichtungsverfahrens bei der Herstellung von Informationsaufzeichnungsmaterialien u.a. auch von wärmeempfindlichen Aufzeichnungsmaterialien, wobei mehrschichtige Aufzeichnungsschichten durch Aufbringen des aus mehreren Beschichtungsdispersionsfilmen bestehenden Vorhangs auf Substrate realisiert werden (Geschwindigkeit max. 200 m/min).

Die Einstellung der Betriebsgeschwindigkeit der Streichanlage auf mindestens etwa 400 m/min hat sowohl betriebswirtschaftliche als auch technische Vorteile. Bevorzugt beträgt die Betriebsgeschwindigkeit mindestens etwa 750 m/min, besonders bevorzugt mindestens etwa 1000 m/min und ganz besonders bevorzugt mindestens etwa 1500 m/min. Es war insbesondere überraschend, dass selbst bei letztgenannter Geschwindigkeit das erhaltene wärmeempfindliche Aufzeichnungsmaterial in keiner Weise beeinträchtigt ist und die Betriebsdurchführung selbst bei dieser hohen Geschwindigkeit optimal abläuft.

In einer bevorzugten Ausführungsform des erfindungsgemäßen Verfahrens weist die wässrige entlüftete Auftragssuspension eine Viskosität von etwa 150 bis etwa 800 mPas (Brookfield, 100 U/min, 20 °C) auf. Wird der Wert von etwa 150 mPas unterschritten bzw. der Wert von etwa 800 mPas überschritten, dann führt dies zu einer mangelhaften Lauffähigkeit der Streichmasse am Streichaggregat. Besonders bevorzugt beträgt die Viskosität der wässrigen entlüfteten Auftragssuspension etwa 200 bis etwa 500 mPas.

In einer bevorzugten Ausführungsform kann zur Optimierung des Verfahrens die Oberflächenspannung der wässrigen Auftragssuspension auf etwa 25 bis etwa 60 mN/m, bevorzugt auf etwa 35 bis etwa 50 mN/m (gemessen

entsprechend der statischen Ringmethode nach Du Noüy, DIN 53914), eingestellt werden.

Die Ausbildung der wärmeempfindlichen farbbildenden Schicht kann on-line oder in einem separaten Streichvorgang off-line erfolgen. Dies gilt auch für eventuell nachfolgend aufgetragene Schichten oder Zwischenschichten.

Das vorstehend geschilderte Verfahren ist unter wirtschaftlichen Gesichtspunkten vorteilhaft und erlaubt eine hohe Verfahrensführung der Streichanlage sogar bei einer Geschwindigkeit von mehr als 1500 m/min, ohne dass es zu Beeinträchtigungen des Verfahrenserzeugnisses, das heißt des erfindungsgemäßen wärmeempfindlichen Aufzeichnungsmaterials, kommt. Die Verfahrensführung kann on-line und off-line erfolgen, was eine wünschenswerte Flexibilität zur Folge hat.

Die im Zusammenhang mit der Verbindung der Formel (A) aufgelisteten bevorzugten Ausführungsformen gelten auch für das erfindungsgemäße wärmeempfindliche Aufzeichnungsmaterial.

Die vorliegende Erfindung betrifft auch ein wärmeempfindliches Aufzeichnungsmaterial, welches mit dem vorstehend genannten Verfahren erhältlich ist.

Es ist, insbesondere bei Trägersubstraten aus Papier, vorteilhaft, wenn die getrocknete wärmeempfindliche farbbildende Schicht einer Glätt-Maßnahme unterzogen wird. Hierbei ist es vorteilhaft, die Bekk-Glätte, gemessen nach ISO 5627, auf etwa 100 bis etwa 1000 Sek., vorzugsweise auf etwa 250 bis etwa 600 Sek., einzustellen.

Die Oberflächenrauigkeit (PPS) nach ISO 8791-4 liegt im Bereich von etwa 0,50 bis etwa 2,50 $\mu$m, vorzugsweise im Bereich von 1,00-2,00 $\mu$m.

Das erfindungsgemäße wärmeempfindliche Aufzeichnungsmaterial ist phenolfrei und für POS(point-of-sale)-, Etiketten- und/oder Ticket-Anwendungen gut geeignet. Es eignet sich auch zur Herstellung von Parkscheinen, Fahrkarten, Eintrittskarten, Lotto- und Wettscheinen etc., welche im Thermodirektverfahren bedruckt werden können und eine hohe Beständigkeit der darauf aufgezeichneten Bilder unter längerfristiger Lagerung, selbst unter verschärften Klimabedingungen hinsichtlich Temperatur und Umgebungsfeuchte, benötigen.

Überraschenderweise hat es sich gezeigt, dass die mit den Farbentwicklern der Formel (A) erhaltenen wärmeempfindlichen Aufzeichnungsmaterialien ihre Fähigkeit, hohe Bilddichten zu erzeugen, auch nach wochenlanger Lagerung der unbedruckten Materialien bei hoher Umgebungsluftfeuchte und/oder Temperatur, praktisch nicht einbüßen (hohe Lagerfähigkeit).

Die Erfindung betrifft auch die Verwendung der Verbindung der Formel (A) als nicht-phenolischen Farbentwickler in einem wärmeempfindlichen Aufzeichnungsmaterial.

Die Erfindung wird nachfolgend anhand nicht beschränkender Beispiele im Detail erläutert.

Beispiele:

Die Verbindungen **I- XXIX** (Tabelle 2) wurden wie nachstehend beschrieben hergestellt:

Tabelle 2: Zusammenstellung ausgewählter Verbindungen der Formel (A)

| | Ar | $Ar^1$ | n |
|---|---|---|---|
| **I** | $C_6H_5$ | $C_6H_5$ | 1 |
| **II** | $C_6H_5$ | $4\text{-}CH_3\text{-}C_6H_4$ | 1 |
| **III** | $C_6H_5$ | $2\text{-}Cl\text{-}C_6H_4$ | 1 |
| **IV** | $C_6H_5$ | $3\text{-}Cl\text{-}C_6H_4$ | 1 |
| **v** | $C_6H_5$ | $4\text{-}Cl\text{-}C_6H_4$ | 1 |
| **VI** | $C_6H_5$ | $4\text{-}CH_3O\text{-}C_6H_4$ | 1 |
| **VII** | $C_6H_5$ | $4\text{-}CH_3CO\text{-}C_6H_4$ | 1 |
| **VIII** | $C_6H_5$ | $4\text{-}NO_2\text{-}C_6H_4$ | 1 |
| **IX** | $C_6H_5$ | $4\text{-}(CO_2CH_3)\text{-}C_6H_4$ | 1 |
| **X** | $C_6H_5$ | $2\text{-}(CO_2C_2H_5)\text{-}C_6H_4$ | 1 |
| **XI** | $C_6H_5$ | $4\text{-}(CO_2C_6H_5)\text{-}C_6H_4$ | 1 |
| **XII** | $C_6H_5$ | $3\text{-}(OCOC_6H_5)\text{-}C_6H_4$ | 1 |
| **XIII** | $C_6H_5$ | $3\text{-}[OSO_2\text{-}(4\text{-}CH_3\text{-}C_6H_4)]\text{-}C_6H_4$ | 1 |
| **XIV** | $C_6H_5$ | $4\text{-}[OSO_2\text{-}(4\text{-}CH_3\text{-}C_6H_4)]\text{-}C_6H_4$ | 1 |
| **XV** | $C_6H_5$ | $3\text{-}[SO_2O\text{-}(4\text{-}CH_3\text{-}C_6H_4)]\text{-}C_6H_4$ | 1 |
| **XVI** | $C_6H_5$ | $4\text{-}[SO_2O\text{-}(4\text{-}CH_3\text{-}C_6H_4)]\text{-}C_6H_4$ | 1 |

(fortgesetzt)

| | Ar | $Ar^1$ | n |
|---|---|---|---|
| **XVII** | $C_6H_5$ | 4-[$SO_2$NH-(2-thiazolyl)]-$C_6H_4$ | 1 |
| **XVIII** | $C_6H_5$ | 4-[$SO_2$NH-2-(4-$CH_3$-pyrimidyl)]-$C_6H_4$ | 1 |
| **XIX** | $C_6H_5$ | 1-Naphthyl | 1 |
| **XX** | $C_6H_5$ | 2-Thiazolyl | 1 |
| **XXI** | $C_6H_5$ | 2-Benzothiazolyl | 1 |
| **XXII** | $C_6H_5$ | 2-Pyridyl | 1 |
| **XXIII** | $C_6H_5$ | 4-Pyridyl | 1 |
| **XXIV** | 4-$CH_3$CO-$C_6H_4$ | 4-$CH_3$CO-$C_6H_4$ | 1 |
| **XXV** | 4-$CH_3$CO-$C_6H_4$ | 3-[$OSO_2$-(4-$CH_3$-$C_6H_4$)]-$C_6H_4$ | 1 |
| **XXVI** | 4-$CH_3$CO-$C_6H_4$ | 4-[$SO_2$O-(4-$CH_3$-$C_6H_4$)]-$C_6H_4$ | 1 |
| **XXVII** | 4-$CH_3$O-$C_6H_4$ | 4-[$SO_2$O-(4-$CH_3$-$C_6H_4$)]-$C_6H_4$ | 1 |
| **XXVIII** | 3-Cl-$C_6H_4$ | 4-[$SO_2$O-(4-$CH_3$-$C_6H_4$)]-$C_6H_4$ | 1 |
| **XXIX** | 1,4-$C_6H_4$ | $C_6H_5$ | 2 |

Stufe A - Herstellung der Harnstoffe (in Anlehnung an R. C. Moschel, W. R. Hudgins, A. Dipple, J. Org. Chem., 51 (22), 4180 (1986)):
Zu einer Lösung aus 10 mmol Amin und 10 mmol Salzsäure (25%ig) in 30 mL Wasser wird eine Lösung aus 15 mmol Kaliumcyanat in 10 mL Wasser gegeben. Die Lösung wird für 18 h bei Raumtemperatur gerührt. Die präzipitierten Harnstoffe werden abfiltriert, mit 30 mL Wasser gewaschen und aus Dichlormethan oder Ethylacetat umkristallisiert.

Stufe B - Herstellung der Allophanate (in Anlehnung an M. M. Al Sabbagh, M. Calmon, J. P. Calmon, Bull. Soc. Chim. Fr., 3-4 (Pt. 2), 73 (1983)):
Zu einer Lösung aus 66 mmol des entsprechenden Harnstoffs und 73 mmol Pyridin in 80 mL Dichlormethan wird eine Lösung aus 66 mmol Phenylchlorformiat in 20 mL Dichlormethan bei Raumtemperatur unter Rühren tropfenweise gegeben. Die Reaktionslösung wird 18 Stunden bei Raumtemperatur gerührt und anschließend mit 100 mL Wasser versetzt. Die Phasen werden getrennt. Die organische Phase wird mit 100 mL Wasser gewaschen. Dieser Vorgang wird wiederholt, bevor nach zweimaliger Extraktion der vereinigten wässrigen Phasen mit 100 mL Dichlormethan die vereinigten organischen Phasen über Magnesiumsulfat getrocknet werden. Nach Entfernen des Lösungsmittels im Vakuum erfolgt die Aufreinigung durch Umkristallisieren aus Dichlormethan und wenigen Tropfen n-Hexan.

Stufe C - Herstellung der Biurete (in Anlehnung an F. H. S. Curd, D. G. Davey, D. N. Richardson, J. Chem. Soc., 1732 (1949)):
Zu einer Lösung aus 10 mmol des entsprechenden Allophanats und 10 mmol Kaliumcarbonat in 240 mL Dichlormethan wird eine Lösung aus 10 mmol des entsprechenden Amins in 60 mL Dichlormethan bei Raumtemperatur unter Rühren tropfenweise gegeben. Das Reaktionsgemisch wird 18 Stunden lang refluxiert und anschließend mit 300 mL Wasser versetzt. Die wässrige Phase wird abgetrennt. Die organische Phase wird erneut mit 300 mL Wasser versetzt und die wässrige Phase durch Zugabe 25%iger Salzsäure neutral gestellt. Die Phasen werden getrennt. Nach Extraktion der wässrigen Phase mit 300 mL Dichlormethan werden die vereinigten organischen Phasen mit 300 mL Wasser gewaschen und über Magnesiumsulfat getrocknet. Nach Entfernen des Lösungsmittels im Vakuum erfolgt die Aufreinigung durch Umkristallisieren aus Dichlormethan und wenigen Tropfen n-Hexan.

Die Ausgangsverbindungen sind entweder kommerziell erhältlich oder wurden nach bekannten Literaturvorschriften hergestellt.

Analytische Daten:

**I,** $C_{14}H_{13}N_3O_2$, M = 255.3,1-Phenyl-3-(phenylcarbamoyl)urea

MS (ESI): m/z (%) = 256.1 (90) $[M+H]^+$, 137.1 (100) $[M+H-Ar^1NCO]^+$. $^1$H-NMR (500 MHz, DMSO-$d_6$): $\delta$ (ppm) = 9.71 (2H, s), 9.07 (1H, s), 7.51-7.49 (4H, m), 7.35-7.32 (4H, m), 7.09-7.06 (2H, m).
$^{13}$C-NMR (126 MHz, DMSO-$d_6$): $\delta$ (ppm) = 151.95 (NHCONH), 137.82, 128.87, 123.29, 119.27.

**II,** $C_{15}H_{15}N_3O_2$, M = 269.3, 1-(4-Methylphenyl)-3-(phenylcarbamoyl)urea

MS (ESI): m/z (%) = 270.1 (100) $[M+H]^+$.
$^1$H-NMR (500 MHz, DMSO-$d_6$): δ (ppm) = 9.76 (1H, s), 9.64 (1H, s), 9.06 (1H, s), 7.50-7.48 (2H, m), 7.38-7.36 (2H, m), 7.34-7.31 (2H, m), 7.14-7.12 (2H, m), 7.08-7.05 (1H, m), 2.26 (3H, s).
$^{13}$C-NMR (126 MHz, DMSO-$d_6$): δ (ppm) = 151.99 (NHCONH), 151.97 (NHCONH), 137.90, 135.28, 132.32, 129.30, 128.91, 123.28, 119.32, 119.24, 20.33 ($\underline{C}H_3$).

**III,** $C_{14}H_{12}ClN_3O_2$, M = 289.7, 1-(2-Chlorphenyl)-3-(phenylcarbamoyl)urea

MS (ESI): m/z (%) = 290.1 (98) $[M+H]^+$.
$^1$H-NMR (500 MHz, DMSO-$d_6$): δ (ppm) = 10.44 (1H, s), 9.42 (1H, s), 9.40 (1H, s), 8.22 (1H, dd, J = 8.3, 1.5 Hz), 7.50 (1H, dd, J = 8.0, 1.5 Hz), 7.48-7.46 (2H, m), 7.36-7.32 (3H, m), 7.12-7.07 (2H, m).
$^{13}$C-NMR (126 MHz, DMSO-$d_6$): δ (ppm) = 152.50 (NHCONH), 151.37 (NHCONH), 137.71, 134.81, 129.22, 128.93, 127.68, 124.35, 123.43, 122.46, 121.45, 119.33.

**IV,** $C_{14}H_{12}ClN_3O_2$, M = 289.7,1-(3-Chlorphenyl)-3-(phenylcarbamoyl)urea

MS (ESI): m/z (%) = 290.1 (100) $[M+H]^+$.
$^1$H-NMR (500 MHz, DMSO-$d_6$): δ (ppm) = 9.88 (1H, s), 9.63 (1H, s), 9.16 (1H, s), 7.75-7.75 (1H, m), 7.50-7.48 (2H, m), 7.36-7.31 (4H, m), 7.13-7.11 (1H, m), 7.09-7.06 (1H, m).
$^{13}$C-NMR (126 MHz, DMSO-$d_6$): δ (ppm) = 151.91 (NHCONH), 151.84 (NHCONH), 139.38, 137.76, 133.28, 130.47, 128.90, 123.39, 122.99, 119.32, 118.77, 117.78.

**V,** $C_{14}H_{12}ClN_3O_2$, M = 289.7, 1-(4-Chlorphenyl)-3-(phenylcarbamoyl)urea

MS (ESI): m/z (%) = 290.0 (100) $[M+H]^+$.
$^1$H-NMR (500 MHz, DMSO-$d_6$): δ (ppm) = 9.81 (1H, s), 9.65 (1H, s), 9.11 (1H, s), 7.53-7.52 (2H, m), 7.49-7.47 (2H, m), 7.38-7.36 (2H, m), 7.34-7.31 (2H, m), 7.09-7.06 (1H, m).
$^{13}$C-NMR (126 MHz, DMSO-$d_6$): δ (ppm) = 151.88 (NHCONH), 151.85 (NHCONH), 137.75, 136.81, 128.86, 128.70, 126.97, 123.33, 120.87, 119.28.

**VI,** $C_{15}H_{15}N_3O_3$, M = 285.3, 1-(4-Methoxyphenyl)-3-(phenylcarbamoyl)urea

MS (ESI): m/z (%) = 284.1 (100) $[M-H]^-$.
$^1$H-NMR (500 MHz, DMSO-$d_6$): δ (ppm) = 9.73 (1H, s), 9.51 (1H, s), 9.00 (1H, s), 7.49-7.48 (2H, m), 7.40-7.38 (2H, m), 7.34-7.31 (2H, m), 7.08-7.05 (1H, m), 6.91-6.90 (2H, m), 3.73 (3H, s).
$^{13}$C-NMR (126 MHz, DMSO-$d_6$): δ (ppm) = 155.47, 152.05 (NHCONH), 152.00 (NHCONH), 137.90, 130.73, 128.89, 123.24, 121.17, 119.22, 114.07, 55.17 ($O\underline{C}H_3$).

**VII,** $C_{16}H_{15}N_3O_3$, M = 297.3, 1-(4-Acetylphenyl)-3-(phenylcarbamoyl)urea

MS (ESI): m/z (%) = 298.1 (100) $[M+H]^+$.
$^1$H-NMR (500 MHz, DMSO-$d_6$): δ (ppm) = 10.05 (1H, s), 9.63 (1H, s), 9.18 (1H, s), 7.94-7.92 (2H, m), 7.63-7.61 (2H, m), 7.50-7.48 (2H, m), 7.35-7.32 (2H, m), 7.09-7.06 (1H, m), 2.52 (3H, s).
$^{13}$C-NMR (126 MHz, DMSO-$d_6$): δ (ppm) = 196.29 ($\underline{C}OCH_3$), 151.81 (NHCONH), 151.76 (NHCONH), 142.29, 137.70, 131.75, 129.51, 128.87, 123.41, 119.34, 118.34, 26.29 ($\underline{C}H_3$).

**VIII,** $C_{14}H_{12}N_4O_4$, M = 300.3, 1-(4-Nitrophenyl)-3-(phenylcarbamoyl)urea

MS (ESI): m/z (%) = 301.0 (100) $[M+H]^+$.
$^1$H-NMR (500 MHz, DMSO-$d_6$): δ (ppm) = 10.37 (1H, s), 9.65 (1H, s), 9.33 (1H, s), 8.20-8.18 (2H, m), 7.74-7.72 (2H, m), 7.49-7.47 (2H, m), 7.34-7.31 (2H, m), 7.09-7.06 (1H, m).
$^{13}$C-NMR (126 MHz, DMSO-$d_6$): δ (ppm) = 151.76 (NHCONH), 151.70 (NHCONH), 144.31, 142.19, 137.65, 128.89, 124.95, 123.48, 119.36, 118.76.

**IX,** $C_{16}H_{15}N_3O_4$, M = 313.3, Methyl 4-[(phenylcarbamoyl)ureido]benzoat

MS (ESI): m/z (%) = 314.1 (100) $[M+H]^+$.
$^1$H-NMR (500 MHz, DMSO-$d_6$): δ (ppm) = 10.24 (1H, s), 9.82 (1H, s), 9.33 (1H, s), 7.93-7.91 (2H, m), 7.64-7.62

(2H, m), 7.50-7.49 (2H, m), 7.34-7.31 (2H, m), 7.09-7.06 (1H, m), 3.81 (3H, s).
$^{13}$C-NMR (126 MHz, DMSO-$d_6$): δ (ppm) = 165.72 (COO), 151.88 (NHCONH), 151.82 (NHCONH), 142.48, 137.79, 130.39, 128.90, 123.94, 123.38, 119.29, 118.43, 51.83 ($\underline{C}H_3$).

**X,** $C_{17}H_{17}N_3O_4$, M = 327.3, Ethyl 2-[(phenylcarbamoyl)ureido]benzoat

MS (ESI): m/z (%) = 328.1 (23) $[M+H]^+$, 350.0 (100) $[M+Na]^+$.
$^1$H-NMR (500 MHz, DMSO-$d_6$): δ (ppm) = 11.21 (1H, s), 9.49 (1H, s), 9.38 (1H, s), 8.30-8.28 (1H, m), 7.94-7.93 (1H, m), 7.60-7.57 (1H, m), 7.49-7.47 (2H, m), 7.35-7.32 (2H, m), 7.19-7.16 (1H, m), 7.09-7.06 (1H, m), 4.36 (2H, d, J = 7.1 Hz), 1.35 (3H, d, *J* = 7.1 Hz).
$^{13}$C-NMR (126 MHz, DMSO-$d_6$): δ (ppm) = 166.05 (COO), 151.82 (NHCONH), 151.69 (NHCONH), 139.01, 137.94, 133.35, 130.50, 128.84, 123.17, 122.75, 121.89, 119.10, 118.24, 61.01 ($\underline{C}H_2$), 13.93 ($\underline{C}H_3$).

**XI,** $C_{21}H_{17}N_3O_4$, M = 375.4, Phenyl 4-[(phenylcarbamoyl)ureido]benzoat

MS (ESI): m/z (%) = 374.0 (100) $[M-H]^-$.
$^1$H-NMR (500 MHz, DMSO-$d_6$): δ (ppm) = 10.14 (1H, s), 9.64 (1H, s), 9.23 (1H, s), 8.11-8.10 (2H, m), 7.73-7.71 (2H, m), 7.52-7.50 (2H, m), 7.48-7.45 (2H, m), 7.36-7.33 (2H, m), 7.32-7.29 (1H, m), 7.28-7.26 (2H, m), 7.10-7.07 (1H, m).
$^{13}$C-NMR (126 MHz, DMSO-$d_6$): δ (ppm) = 164.00 (COO), 151.78 (NHCONH), 150.65, 143.05, 137.68, 131.09, 129.42, 128.88, 125.77, 123.43, 123.15, 121.84, 119.35, 118.58.

**XII,** $C_{21}H_{17}N_3O_4$, M = 375.4,3-[(Phenylcarbamoyl)ureido]phenyl benzoat

MS (ESI): m/z (%) = 374.1 (100) $[M-H]^-$.
$^1$H-NMR (500 MHz, DMSO-$d_6$): δ (ppm) = 9.91 (1H, s), 9.70 (1H, s), 9.19 (1H, s), 8.15-8.14 (2H, m), 7.76-7.73 (1H, m), 7.62-7.59 (3H, m), 7.51-7.49 (2H, m), 7.43-7.40 (1H, m), 7.35-7.31 (3H, m), 7.08-7.06 (1H, m), 7.02-7.00 (1H, m). $^{13}$C-NMR (126 MHz, DMSO-$d_6$): δ (ppm) = 164.41 (COO), 151.96 (NHCONH), 151.88 (NHCONH), 150.92, 139.03, 137.79, 133.94, 129.71, 128.87, 128.85, 123.32, 119.29, 116.67, 116.59, 112.70.

**XIII,** $C_{21}H_{19}N_3O_5S$, M = 425.5,3-[(Phenylcarbamoyl)ureido]phenyl 4-tolylsulfonat

MS (ESI): m/z (%) = 424.0 (100) $[M-H]^-$.
$^1$H-NMR (500 MHz, DMSO-$d_6$): δ (ppm) = 9.87 (1H, s), 9.62 (1H, s), 9.11 (1H, s), 7.77-7.75 (2H, m), 7.49-7.46 (4H, m), 7.43-7.43 (1H, m), 7.35-7.29 (4H, m), 7.09-7.06 (1H, m), 6.69-6.67 (1H, m), 2.41 (3H, s).
$^{13}$C-NMR (126 MHz, DMSO-$d_6$): δ (ppm) = 151.78 (NHCONH), 151.77 (NHCONH), 149.27, 145.69, 139.26, 137.70, 131.48, 130.13, 130.08, 128.87, 128.11, 123.39, 119.32, 117.81, 116.31, 112.64, 21.09 ($\underline{C}H_3$).

**XIV,** $C_{21}H_{19}N_3O_5S$, M = 425.5, 4-[(Phenylcarbamoyl)ureido]phenyl 4-tolylsulfonat

MS (ESI): m/z (%) = 424.1 (100) $[M-H]^-$.
$^1$H-NMR (500 MHz, DMSO-$d_6$): δ (ppm) = 9.80 (1H, s), 9.63 (1H, s), 9.10 (1H, s), 7.73-7.72 (2H, m), 7.48-7.45 (6H, m), 7.34-7.31 (2H, m), 7.08-7.05 (1H, m), 6.99-6.97 (2H, m), 2.41 (3H, s).
$^{13}$C-NMR (126 MHz, DMSO-$d_6$): δ (ppm) = 151.88 (NHCONH), 151.83 (NHCONH), 145.62, 144.30, 137.73, 136.86, 131.37, 130.10, 128.86, 128.15, 123.34, 122.52, 120.35, 119.26, 21.08 ($\underline{C}H_3$).

**XV,** $C_{21}H_{19}N_3O_5S$, M = 425.5, 4-Tolyl 3-[(phenylcarbamoyl)ureido]phenylsulfonat

MS (ESI): m/z (%) = 424.0 (100) $[M-H]^-$.
$^1$H-NMR (500 MHz, DMSO-$d_6$): δ (ppm) = 10.09 (1H, s), 9.59 (1H, s), 9.23 (1H, s), 8.26-8.25 (1H, m), 7.74-7.72 (1H, m), 7.60-7.57 (1H, m), 7.51-7.49 (3H, m), 7.35-7.31 (2H, m), 7.18-7.16 (2H, m), 7.10-7.06 (1H, m), 6.94-6.91 (2H, m), 2.26 (3H, s).
$^{13}$C-NMR (126 MHz, DMSO-$d_6$): δ (ppm) = 151.97 (NHCONH), 151.73 (NHCONH), 146.85, 139.09, 137.69, 136.90, 135.12, 130.27, 130.24, 128.85, 125.10, 123.42, 122.61, 121.62, 119.37, 117.87, 20.25 ($\underline{C}H_3$).

**XVI,** $C_{21}H_{19}N_3O_5S$, M = 425.5, 4-Tolyl 4-[(phenylcarbamoyl)ureido]phenylsulfonat

MS (ESI): m/z (%) = 424.0 (100) $[M-H]^-$.

$^{1}H$-NMR (500 MHz, DMSO-$d_6$): δ (ppm) = 10.23 (1H, s), 9.60 (1H, s), 9.28 (1H, s), 7.79-7.74 (4H, m), 7.50-7.49 (2H, m), 7.35-7.32 (2H, m), 7.16-7.15 (2H, m), 7.10-7.07 (1H, m), 6.90-6.89 (2H, m), 2.25 (3H, s).
$^{13}C$-NMR (126 MHz, DMSO-$d_6$): δ (ppm) = 151.79 (NHCONH), 151.70 (NHCONH), 146.91, 143.68, 137.62, 136.74, 130.21, 129.66, 128.88, 127.74, 123.48, 121.70, 119.37, 118.97, 20.25 ($\underline{C}H_3$).

**XVII,** $C_{17}H_{15}N_5O_4S_2$, M = 417.5, 1-(4-Sulfathiazolylphenyl)-3-(phenylcarbamoyl)urea

MS (ESI): m/z (%) = 416.0 (100) $[M-H]^-$.
$^{1}H$-NMR (500 MHz, DMSO-$d_6$): δ (ppm) = 10.06 (1H, s), 9.76 (1H, s), 9.48 (1H, s), 7.77-7.75 (2H, m), 7.62-7.60 (2H, m), 7.51-7.49 (2H, m), 7.34-7.31 (2H, m), 7.16 (1H, d, J = 4.3 Hz), 7.08-7.06 (1H, m), 6.70 (1H, d, J = 4.3 Hz).
$^{13}C$-NMR (126 MHz, DMSO-$d_6$): δ (ppm) = 169.08, 151.97 (NHCONH), 151.91 (NHCONH), 140.61, 137.81, 137.77, 128.90, 128.90, 127.08, 123.40, 119.42, 118.65, 107.86.

**XVIII,** $C_{19}H_{18}N_6O_4S$, M = 426.4, (2-(4-Methyl-pyrimidyl)) 4-[(Phenylcarbamoyl)ureido]phenylsulfonamid

MS (ESI): m/z (%) = 425.0 (100) $[M-H]^-$.
$^{1}H$-NMR (500 MHz, DMSO-$d_6$): δ (ppm) = 10.41 (1H, s), 10.00 (1H, bs), 9.94 (1H, s), 9.44 (1H, s), 8.32 (1H, d, J = 5.1 Hz), 7.97-7.95 (2H, m), 7.68-7.67 (2H, m), 7.49-7.48 (2H, m), 7.33-7.30 (2H, m), 7.08-7.05 (1H, m), 6.89 (1H, d, J = 5.1 Hz), 2.31 (3H, s).
$^{13}C$-NMR (126 MHz, DMSO-$d_6$): δ (ppm) = 168.20, 157.42, 156.51, 151.94 (NHCONH), 151.83 (NHCONH), 141.95, 137.80, 134.32, 129.18, 128.89, 123.37, 119.28, 118.24, 114.77, 23.21 ($\underline{C}H_3$).

**XIX,** $C_{18}H_{15}N_3O_2$, M = 305.3, 1-(1-Naphthyl)-3-(phenylcarbamoyl)urea

MS (ESI): m/z (%) = 304.1 (100) $[M-H]^-$.
$^{1}H$-NMR (500 MHz, DMSO-$d_6$): δ (ppm) = 9.84 (3H, bs), 8.09-8.05 (2H, m), 7.97-7.95 (1H, m), 7.73-7.71 (1H, m), 7.65-7.62 (1H, m), 7.58-7.50 (4H, m), 7.37-7.34 (2H, m), 7.11-7.08 (1H, m).
$^{13}C$-NMR (126 MHz, DMSO-$d_6$): δ (ppm) = 152.77 (NHCONH), 152.42 (NHCONH), 137.87, 133.60, 132.76, 128.87, 128.46, 126.29, 126.01, 125.84, 125.69, 124.04, 123.29, 120.65, 119.35, 118.06.

**XX,** $C_{11}H_{10}N_4O_2S$, M = 262.3, 1-(2-Thiazolyl)-3-(phenylcarbamoyl)urea

MS (ESI): m/z (%) = 263.0 (44) $[M+H]^+$, 170.0 (100) $[M-ArNH_{3]}^+$.
$^{1}H$-NMR (500 MHz, DMSO-$d_6$): δ (ppm) = 11.32 (1H, s), 9.62 (1H, s), 9.43 (1H, s), 7.51-7.49 (2H, m), 7.45-7.44 (1H, m), 7.35-7.32 (2H, m), 7.22-7.21 (1H, m), 7.11-7.08 (1H, m).
$^{13}C$-NMR (126 MHz, DMSO-$d_6$): δ (ppm) = 158.42, 151.80 (NHCONH), 151.49 (NHCONH), 137.51, 136.99, 128.86, 123.55, 119.49, 113.57.

**XXI,** $C_{15}H_{12}N_4O_2S$, M = 312.3, 1-(2-Benzothiazolyl)-3-(phenylcarbamoyl)urea

MS (ESI): m/z (%) = 313.0 (100) $[M+H]^+$.
$^{1}H$-NMR (500 MHz, DMSO-$d_6$): δ (ppm) = 11.54 (1H, bs), 9.81 (1H, s), 9.74 (1H, s), 7.97-7.95 (1H, m), 7.71-7.70 (1H, m), 7.53-7.51 (2H, m), 7.45-7.42 (1H, m), 7.37-7.34 (2H, m), 7.32-7.29 (1H, m), 7.13-7.09 (1H, m).
$^{13}C$-NMR (126 MHz, DMSO-$d_6$): δ (ppm) = 151.47 (NHCONH), 151.47 (NHCONH), 149.66, 144.41, 142.92, 137.50, 128.88, 126.17, 126.05, 123.60, 123.44, 121.68, 119.50.

**XXII,** $C_{13}H_{12}N_4O_2$, M = 256.3, 1-(2-Pyridyl)-3-(phenylcarbamoyl)urea

MS (ESI): m/z (%) = 254.9 (100) $[M-H]^-$.
$^{1}H$-NMR (500 MHz, DMSO-$d_6$): δ (ppm) = 10.07 (3H, bs), 8.31-8.30 (1H, m), 7.82-7.78 (1H, m), 7.76-7.75 (1H, m), 7.51-7.49 (2H, m), 7.35-7.32 (2H, m), 7.11-7.06 (2H, m).
$^{13}C$-NMR (126 MHz, DMSO-$d_6$): δ (ppm) = 152.17, 151.50 (NHCONH), 151.35 (NHCONH), 147.54, 138.59, 137.73, 128.88, 123.40, 119.36, 118.98, 112.67.

**XXIII,** $C_{13}H_{12}N_4O_2$, M = 256.3, 1-(4-Pyridyl)-3-(phenylcarbamoyl)urea

MS (ESI): m/z (%) = 255.1 (77) $[M-H]^-$.
$^{1}H$-NMR (500 MHz, DMSO-$d_6$): δ (ppm) = 10.05 (1H, s), 9.59 (1H, s), 9.25 (1H, s), 8.44-8.43 (2H, m), 7.50-7.48

(4H, m), 7.35-7.32 (2H, m), 7.10-7.07 (1H, m). $^{13}$C-NMR (126 MHz, DMSO-$d_6$): $\delta$ (ppm) = 151.81 (NHCONH), 151.69 (NHCONH), 150.30, 144.78, 137.61, 128.85, 123.46, 119.39, 113.21.

**XXIV,** $C_{18}H_{17}N_3O_4$, M = 339.3, 1-(4-Acetylphenyl)-3-(4-acetylphenyl-carbamoyl)urea

MS (ESI): m/z (%) = 338.1 (100) [M-H]$^-$.
$^1$H-NMR (500 MHz, DMSO-$d_6$): $\delta$ (ppm) = 10.35-8.94 (3H, m), 7.94-7.92 (4H, m), 7.63-7.61 (4H, m), 2.52 (6H, s).
$^{13}$C-NMR (126 MHz, DMSO-$d_6$): $\delta$ (ppm) = 196.30 ($\underline{C}OCH_3$), 151.68 (NHCONH), 142.19, 131.81, 129.49, 118.39, 26.29 ($\underline{C}H_3$).

**XXV,** $C_{23}H_{21}N_3O_6S$, M = 467.5, 3-[(4-Acetylphenylcarbamoyl)ureido]phenyl 4-tolylsulfonat

MS (ESI): m/z (%) = 466.1 (100) [M-H]$^-$.
$^1$H-NMR (500 MHz, DMSO-$d_6$): $\delta$ (ppm) = 10.04 (1H, s), 9.87 (1H, s), 9.30 (1H, s), 7.95-7.93 (2H, m), 7.77-7.75 (2H, m), 7.64-7.62 (2H, m), 7.48-7.47 (2H, m), 7.43-7.43 (2H, m), 7.31-7.30 (1H, m), 6.69-6.67 (1H, m), 2.53 (3H, s), 2.41 (3H, s).
$^{13}$C-NMR (126 MHz, DMSO-$d_6$): $\delta$ (ppm) = 196.31 ($\underline{C}OCH_3$), 151.68 (NHCONH), 151.63 (NHCONH), 149.26, 145.69, 142.22, 139.17, 131.80, 131.47, 130.13, 130.07, 129.50, 128.10, 118.38, 117.87, 116.39, 112.70, 26.31 ($\underline{C}H_3$), 21.09 ($\underline{C}H_3$).

**XXVI,** $C_{23}H_{21}N_3O_6S$, M = 467.5, 4-Tolyl 4-[(4-acetylphenyl-carbamoyl)ureido]phenylsulfonat

MS (ESI): m/z (%) = 466.1 (100) [M-H]$^-$.
$^1$H-NMR (500 MHz, DMSO-$d_6$): $\delta$ (ppm) = 10.14 (1H, s), 9.93 (1H, s), 9.39 (1H, s), 7.95-7.93 (2H, m), 7.79-7.74 (4H, m), 7.64-7.62 (2H, m), 7.17-7.15 (2H, m), 6.91-6.88 (2H, m), 2.52 (3H, s), 2.25 (3H, s).
$^{13}$C-NMR (126 MHz, DMSO-$d_6$): $\delta$ (ppm) = 196.31 ($\underline{C}OCH_3$), 151.66 (NHCONH), 151.52 (NHCONH), 146.90, 143.57, 142.10, 136.76, 131.90, 130.21, 129.65, 129.50, 127.86, 121.70, 119.05, 118.46, 26.31 ($\underline{C}H_3$), 20.25 ($\underline{C}H_3$).

**XXVII,** $C_{22}H_{21}N_3O_6S$, M = 455.5, 4-Tolyl 4-[(4-methoxyphenyl-carbamoyl)ureido]phenylsulfonat

MS (ESI): m/z (%) = 454.0 (100) [M-H]$^-$.
$^1$H-NMR (500 MHz, DMSO-$d_6$): $\delta$ (ppm) = 10.25 (1H, s), 9.40 (1H, s), 9.22 (1H, s), 7.79-7.73 (4H, m), 7.40-7.38 (2H, m), 7.17-7.15 (2H, m), 6.92-6.89 (4H, m), 3.73 (3H, s), 2.26 (3H, s).
$^{13}$C-NMR (126 MHz, DMSO-$d_6$): $\delta$ (ppm) = 155.59, 151.80 (NHCONH), 151.78 (NHCONH), 146.89, 143.71, 136.72, 130.47, 130.19, 129.63, 127.66, 121.66, 121.27, 118.90, 114.05, 55.15 ($O\underline{C}H_3$), 20.23 ($\underline{C}H_3$).

**XXVIII,** $C_{21}H_{18}ClN_3O_5S$, M = 459.9, 4-Tolyl 4-[(3-chlorphenyl-carbamoyl)ureido]phenylsulfonat

MS (ESI): m/z (%) = 458.0 (100) [M-H]$^-$.
$^1$H-NMR (500 MHz, DMSO-$d_6$): $\delta$ (ppm) = 10.27 (1H, s), 9.87 (1H, s), 9.43 (1H, s), 7.79-7.74 (5H, m), 7.35-7.34 (2H, m), 7.17-7.15 (2H, m), 7.13-7.11 (1H, m), 6.90-6.88 (2H, m), 2.25 (3H, s).
$^{13}$C-NMR (126 MHz, DMSO-$d_6$): $\delta$ (ppm) = 151.67 (NHCONH), 151.65 (NHCONH), 146.88, 143.62, 139.18, 136.71, 133.23, 130.41, 130.18, 129.61, 127.79, 123.10, 121.66, 118.96, 118.83, 117.82, 20.23 ($\underline{C}H_3$).

**XXIX,** $C_{22}H_{20}N_6O_4$, M = 432.4, *N,N'*-1,4-Phenylen-bis[*N*"-phenylcarbamoylurea]

MS (ESI): m/z (%) = 431.1 (100) [M-H]$^-$.
$^1$H-NMR (500 MHz, DMSO-$d_6$): $\delta$ (ppm) = 9.70 (2H, s), 9.65 (2H, s), 9.03 (2H, s), 7.50-7.46 (8H, m), 7.34-7.31 (4H, m), 7.09-7.06 (2H, m).
$^{13}$C-NMR (126 MHz, DMSO-$d_6$): $\delta$ (ppm) = 151.92 (NHCONH), 137.82, 133.37, 128.84, 123.25, 119.98, 119.23.

Die Herstellung der erfindungsgemäßen wärmeempfindlichen Aufzeichnungsmaterialien erfolgte wie folgt, wobei als Vergleichsfarbentwickler nicht-phenolische Farbentwickler des Standes der Technik herangezogen wurden, nämlich *N*-(2-(3-Phenylureido)phenyl)benzolsulfonamid (Vergleichsbeispiel **Vb)** sowie ein Sulfonylharnstoff, Pergafast®201, BASF (PF201) (Vergleichsbeispiel **PF201):**
Der Auftrag einer wässrigen Auftragssuspension zur Ausbildung der wärmeempfindlichen farbbildenden Schicht eines wärmeempfindlichen Aufzeichnungspapiers erfolgte im Labormaßstab mittels einer Stabrakel auf eine Seite eines synthetischen Basispapieres (Yupo® FP680) von 63 $g/m^2$. Nach Trocknung wurde ein thermisches Aufzeichnungsblatt erhalten. Die Auftragsmenge der wärmeempfindlichen farbbildenden Schicht lag zwischen 3,8 und 4,2 $g/m^2$.

Anhand der vorstehend gemachten Angaben wurde ein wärmeempfindliches Aufzeichnungsmaterial bzw. Thermopapier hergestellt, wobei die folgenden Rezepturen wässriger Auftragssuspensionen zur Ausbildung eines Verbundgebildes auf einem Trägersubstrat herangezogen und anschließend in üblicher Weise die weiteren Schichten, insbesondere eine Schutzschicht, ausgebildet wurden, worauf hier nicht gesondert eingegangen werden soll.

Herstellen der Dispersionen (jeweils für 1 Gew.-Teil) für die Auftragssuspensionen:
Die wässrige **Dispersion A** (Farbbildnerdispersion) wird durch Mahlen von 20 Gew.-Teilen 3-*N*-n-Dibutylamino-6-methyl-7-anilinofluoran (ODB-2) mit 33 Gew.-Teilen einer 15%igen wässrigen Lösung von Ghosenex™ L-3266 (sulfonierter Polyvinylalkohol, Nippon Ghosei) in einer Perlen-Mühle hergestellt.

Die wässrige **Dispersion B** (Farbentwicklerdispersion) wird durch Mahlen von 40 Gew.-Teilen des Farbentwicklers zusammen mit 66 Gew.-Teilen einer 15%igen wässrigen Lösung von Ghosenex™ L-3266 in einer Perlen-Mühle hergestellt.

Die wässrige **Dispersion C** (Sensibilisierungsmitteldispersion) wird durch Mahlen von 40 Gew.-Teilen Sensibilisierungsmittel mit 33 Gew.-Teilen einer 15%igen wässrigen Lösung von Ghosenex™ L-3266 in einer Perlen-Mühle hergestellt.

Alle durch Mahlen erzeugten Dispersionen haben eine mittlere Körngröße $D_{(4,3)}$ von 0,80-1,20 $\mu$m. Die Messung der Korngrößenverteilung der Dispersionen erfolgte durch Laserbeugung mit einem Coulter LS230-Gerät der Fa. Beckman Coulter.

Die **Dispersion D** (Gleitmitteldispersion) ist eine 20%ige Zinkstearat-Dispersion, bestehend aus 9 Gew.-Teilen Zn-Stearat, 1 Gew.-Teil Ghosenex™ L-3266 und 40 Teilen Wasser.

Pigment P ist eine 72%ige Streichkaolin-Suspension (Lustra® S, BASF).

Der **Binder** besteht aus einer 10%igen wässrigen Polyvinylalkohollösung (Mowiol 28-99, Kuraray Europe).

Die wärmeempfindliche Auftragssuspension wird durch Mischen unter Rühren von 1 Teil **Dispersion A,** 1 Teil **Dispersion B,** 1 Teil **Dispersion C,** 56 Teilen **Dispersion D,** 146 Teilen Pigment P und 138 Teilen **Binder-Lösung** (alles Gew.-Teile) unter Berücksichtigung der Eintragsreihenfolge **B, C, D, P, A, Binder** hergestellt und mit Wasser auf einen Feststoffgehalt von etwa 25% gebracht.

Die so erhaltenen wärmeempfindlichen Beschichtungssuspensionen wurden herangezogen, um Verbundgebilde aus Papierträger und wärmeempfindlicher farbbildender Schicht herzustellen.

Die erfindungsgemäßen wärmeempfindlichen Aufzeichnungsmaterialien wurden wie nachstehend gezeigt ausgewertet (Tabellen 3 und 4).

(1) Dynamische Farbdichte:
Die Papiere (6 cm breite Streifen) wurden thermisch unter Verwendung eines Atlantek 200 Testdruckers (Fa. Atlantek, USA) mit einer Kyocera-Druckleiste von 200 dpi und 560 Ohm bei einer angelegten Spannung von 20,6 V und einer maximalen Pulsbreite von 0,8 ms mit einem Schachbrett-Muster mit 10 Energieabstufungen bedruckt. Die Bilddichte (optische Dichte, o.D.) wurde mit einem einem SpectroEye-Densitometer von X-Rite bei einer Energiestufe von 0,45 mJ/Dot gemessen. Die Messunsicherheit der o.D.-Werte wird mit $\leq$2% veranschlagt.

(2) Statische Farbdichte (Starttemperatur):

Das Aufzeichnungsblatt wurde gegen eine Reihe auf unterschiedliche Temperaturen erhitzten und thermostatierten metallischen Stempeln mit einem Anpressdruck von 0,2 $kg/cm^2$ und einer Kontaktzeit von 5 Sek. gepresst (Thermoprüfer TP 3000QM, Maschinenfabrik Hans Rychiger AG, Steffisburg, Schweiz). Die Bilddichte (opt. Dichte) der so erzeugten Bilder wurde mit einem SpectroEye-Densitometer von X-Rite gemessen.
Der statische Startpunkt ist definitionsmäßig die niedrigste Temperatur, bei welcher eine optische Dichte von 0,2 erreicht wird. Die Genauigkeit des Messverfahrens ist $\leq\pm$0,5 °C.

(3) Beständigkeitsprüfung des Druckbildes unter den Bedingungen der künstlichen Alterung:
Je eine gemäß dem Verfahren von (1) dynamisch aufgezeichnete Probe des thermischen Aufzeichnungspapiers wurde für 7 Tage unter folgenden Bedingungen gelagert:

i) 50 °C (Trocken-Alterung),
ii) 40 °C, 85% relative Feuchte (Feucht-Alterung) und
iii) unter Kunstlicht von Leuchtstoffröhren, Beleuchtungsstärke 16000 Lux (Licht-Alterung).

Nach Ablauf der Testzeit wurde die Bilddichte bei einer Bestromungsenergie von 0,45 mJ/dot gemessen und entsprechend der Formel (Gl. 1) in Bezug zu den entsprechenden Bilddichtewerten vor der künstlichen Alterung gesetzt.

$$\%\ verbleibende\ Bilddichte = \left(\frac{Bilddichte\ nach\ Test}{Bilddichte\ vor\ Test}\right) * 100 \qquad (\text{Gl. } 1)$$

Die Streuung der nach (Gl. 1) berechneten %-Werte beträgt ≤±2 Prozentpunkte.

(4) Lagerfähigkeit des unbedruckten Thermopapieres:
Ein Blatt Aufzeichnungspapier wurde in drei identische Streifen geschnitten. Ein Streifen wurde gemäß dem Verfahren von (1) dynamisch aufgezeichnet und die Bilddichte bestimmt. Die beiden anderen Streifen wurden im unbedruckten (weißen) Zustand für 4 Wochen in einem Klima von a) 40 °C und 85% relativer Feuchte (r. F.) und b) 60 °C und 50% relativer Feuchte (r. F.) gelagert.

Nach Klimatisierung der Papiere bei Raumtemperatur wurden sie gemäß dem Verfahren von (1) dynamisch bedruckt und die Bilddichte bei einer Bestromungsenergie von 0,45 mJ/dot mit dem Densitometer bestimmt. Die verbleibende Schreibleistung (%) der gelagerten zu den frischen (nicht gealterten) Mustern wurde gemäß Gleichung (Gl. 1) berechnet.

Die Tabellen 3 und 4 fassen die Auswertung der hergestellten wärmeempfindlichen Aufzeichnungsmaterialien zusammen.

Tabelle 3: Bilddichte, Starttemperatur und künstliche Alterung;

| Fa rbentwickler | o.D. (0,45 mJ/dot) | Startpunkt (°C) | Künstliche Alterung* | | |
|---|---|---|---|---|---|
| | | | trocken | feucht | Licht |
| **VIII** | 1,28 | 86 | 100 | 98 | 84 |
| **XXV** | 1,22 | 89 | 100 | 97 | 71 |
| **XXVI** | 1,23 | 84 | 100 | 98 | 77 |
| **XXVIII** | 1,24 | 90 | 100 | 99 | 74 |
| Vergleichsbeispiel **Vb** | 1,24 | 82 | 98 | 98 | 76 |
| Vergleichsbeispiel **PF201** | 1,22 | 78 | 98 | 97 | 73 |
| *verbleibende %-Bilddichte ( o.D.), (nach Gl. 1) | | | | | |

Tabelle 4: Schreibleistung nach Lagerung;

| Farbentwickler | o.D. vor Lagerung | 4 Wochen 40 °C / 85% r. F. | | 4 Wochen 60°C / 50% r. F. | |
|---|---|---|---|---|---|
| | | o.D. nach Lagerung | verbleibende o.D. (%)* | o.D. nach Lagerung | verbleibende o.D. (%)* |
| **VIII** | 1,28 | 1,26 | 98,4 | 1,14 | 89,1 |
| **XXV** | 1,22 | 1,20 | 98,4 | 1,11 | 91,0 |
| **XXVI** | 1,23 | 1,20 | 97,6 | 1,10 | 89,4 |
| **XXVIII** | 1,24 | 1,27 | 102,4 | 1,10 | 88,7 |
| Vergleichsbeispiel **Vb** | 1,24 | 1,26 | 101,6 | 1,04 | 83,9 |
| Vergleichsbeispiel **PF201** | 1,22 | 1,20 | 98,4 | 0,81 | 66,4 |
| *nach Gl. 1 | | | | | |

Das erfindungsgemäße wärmeempfindliche Aufzeichnungsmaterial zeigt insbesondere die folgenden vorteilhaften Eigenschaften:

(1) Das aufgezeichnete Bild der erfindungsgemäßen wärmeempfindlichen Aufzeichnungsmaterialien mit den Farbentwicklern (A) weist eine Druckdichte (optische Dichte) auf, die vergleichbar jener der Farbentwickler der Vergleichsmuster ist (Tabelle 3).

(2) Die Temperatur, ab welcher eine visuell merkliche Vergrauung der erfindungsgemäßen wärmeempfindlichen Aufzeichnungsmaterialien eintritt (statischer Startpunkt), ist höher als bei den Vergleichspapieren und erfüllt in hohem Maße die Anforderungen an markttaugliche wärmeempfindliche Aufzeichnungsmaterialien (Tabelle 3).

(3) Die dem Alterungs-Test unterworfenen wärmeempfindlichen Aufzeichnungsmaterialien offenbaren eine hohe Bildbeständigkeit, besser oder vergleichbar zu den Vergleichspapieren (Tabelle 3).

(4) Das Bedrucken der über mehrere Wochen unter extremen Bedingungen gelagerten erfindungsgemäßen wärmeempfindlichen Aufzeichnungsmaterialien führt zu Bilddichten, welche praktisch identisch jenen der ungelagerten (frischen) wärmeempfindlichen Aufzeichnungsmaterialien sind (Tabelle 4).

(5) Mit den Farbentwicklern der Formel (A) lässt sich ein in allen wichtigen anwendungstechnischen Belangen hochwertiges wärmeempfindliches Aufzeichnungsmaterial erhalten, wobei kein mit Farbentwicklern des Standes der Technik erhaltenes Thermopapier ein vergleichbar gutes Leistungsprofil über alle Eigenschaften aufweist.

## Patentansprüche

1. Wärmeempfindliches Aufzeichnungsmaterial, umfassend ein Trägersubstrat sowie eine mindestens einen Farbbildner und mindestens einen phenolfreien Farbentwickler enthaltende wärmeempfindliche farbbildende Schicht, **dadurch gekennzeichnet, dass** der mindestens eine Farbentwickler die Verbindung der Formel (A) ist,

$$Ar(NH\text{-}CO\text{-}NH\text{-}CO\text{-}NH\text{-}Ar^1)_n \qquad (A),$$

worin Ar ein unsubstituierter oder substituierter Phenyl- oder Naphthyl-Rest, $Ar^1$ ein unsubstituierter oder substituierter Phenyl-, Naphthyl-, Pyridyl-, Thiazolyl- oder Benzothiazolyl-Rest und n 1 oder 2 ist.

2. Wärmeempfindliches Aufzeichnungsmaterial nach einem der Ansprüche 1, **dadurch gekennzeichnet, dass** Ar ein mit einem $C_1$-$C_4$-Alkyl-, einem Alkenyl-, einem Alkinyl-, einem Benzyl-, einem Halogen-, einem $NO_2$-, einem CN-, einem Formyl-, einem ROC-, einem RO-, einem $RO_2C$-, einem ROCO-, einem R-$SO_2$O-, einem RO-$SO_2$-, einem RNHCO-, einem RCONH-, einem R-NH-$SO_2$- oder einem R-$SO_2$-NH-Rest substituierter Phenyl-Rest ist, wobei R ein $C_1$-$C_4$-Alkyl-, ein Alkenyl-, ein Alkinyl-, ein Phenyl-, ein Tolyl- oder ein Benzyl-Rest ist.

3. Wärmeempfindliches Aufzeichnungsmaterial nach mindestens einem der vorangegangenen Ansprüche, **dadurch gekennzeichnet, dass** Ar ein unsubstituierter Phenyl-, ein 4-Acetyl-Phenyl-, ein 3-Chlor-Phenyl- oder 4-Methoxy-Phenyl-Rest ist.

4. Wärmeempfindliches Aufzeichnungsmaterial nach mindestens einem der vorangegangenen Ansprüche, **dadurch gekennzeichnet, dass** $Ar^1$ ein mit einem $C_1$-$C_4$-Alkyl-, einem Alkenyl-, einem Alkinyl-, einem Benzyl-, einem Halogen-, einem $NO_2$-, einem CN-, einem Formyl-, einem $R^1$OC-, einem $R^1$O-, einem $R^1O_2C$-, einem $R^1$OCO-, einem $R^1$-$SO_2$O-, einem $R^1$O-$SO_2$-, einem $R^1$NHCO-, einem $R^1$CONH-, einem $R^1$-NH-$SO_2$- oder einem $R^1$-$SO_2$-NH-Rest substituierter Phenyl-Rest ist, wobei ein $C_1$-$C_4$-Alkyl-, ein Alkenyl-, ein Alkinyl-, ein Phenyl-, ein Tolyl-, ein Benzyl-, ein Thiazolyl-, ein Benzothiazolyl- oder ein Pyrimidyl-Rest, ist.

5. Wärmeempfindliches Aufzeichnungsmaterial nach mindestens einem der vorangegangenen Ansprüche, **dadurch gekennzeichnet, dass** $Ar^1$ ein vorzugsweise in 3- oder 4- Stellung mit einem $R^1$O-$SO_2$- oder einem $R^1$-$SO_2$O-Rest substituierter Phenyl-Rest ist.

6. Wärmeempfindliches Aufzeichnungsmaterial nach mindestens einem der vorangegangenen Ansprüche, **dadurch gekennzeichnet, dass** der mindestens eine Farbbildner ein Farbstoff vom Triphenylmethan-Typ, vom Fluoran-Typ, vom Azaphthalid-Typ und/oder vom Fluoren-Typ, bevorzugt vom Fluoran-Typ, ist.

7. Wärmeempfindliches Aufzeichnungsmaterial nach mindestens einem der vorangegangenen Ansprüche, **dadurch gekennzeichnet, dass** die Verbindung der Formel (I) in einer Menge von etwa 3 bis etwa 35 Gew.-%, bevorzugt in einer Menge von etwa 10 bis etwa 25 Gew.-%, bezogen auf den gesamten Feststoffgehalt der wärmeempfindlichen

Schicht, vorliegt.

8. Wärmeempfindliches Aufzeichnungsmaterial nach mindestens einem der vorangegangenen Ansprüche, **dadurch gekennzeichnet, dass** die wärmeempfindliche farbbildende Schicht mindestens ein Sensibilisierungsmittel umfasst.

9. Wärmeempfindliches Aufzeichnungsmaterial nach mindestens einem der vorangegangenen Ansprüche, **dadurch gekennzeichnet, dass** die wärmeempfindliche farbbildende Schicht Additive, wie Stabilisatoren, Bindemittel, Trennmittel, Pigmente und/oder Aufheller, enthält.

10. Wärmeempfindliches Aufzeichnungsmaterial nach mindestens einem der vorangegangenen Ansprüche, **dadurch gekennzeichnet, dass** das Flächenauftragsgewicht der wärmeempfindlichen Schicht etwa 1 bis etwa 10 g/m$^2$, bevorzugt etwa 3 bis etwa 6 g/m$^2$, beträgt.

11. Wärmeempfindliches Aufzeichnungsmaterial nach mindestens einem der vorangegangenen Ansprüche, **dadurch gekennzeichnet, dass** die getrocknete wärmeempfindliche farbbildende Schicht derart einer Glätt-Maßnahme unterzogen wird, dass sie eine Bekk-Glätte, gemessen nach ISO 5627:1995, von etwa 100 bis etwa 1000 Sek aufweist.

12. Wärmeempfindliches Aufzeichnungsmaterial nach mindestens einem der vorangegangenen Ansprüche, **dadurch gekennzeichnet, dass** zwischen dem Trägersubstrat und der wärmeempfindlichen farbbildenden Schicht mindestens eine weitere Zwischenschicht vorliegt, die vorzugsweise organische Hohlkugelpigmente und/oder kalzinierte Kaoline enthält.

13. Verfahren zur Herstellung eines wärmeempfindlichen Aufzeichnungsmaterials nach mindestens einem der Ansprüche 1 bis 12, wobei auf ein Trägersubstrat eine die Ausgangsmaterialien der wärmeempfindlichen farbbildenden Schicht enthaltende wässrige Suspension aufgetragen und getrocknet wird, wobei die wässrige Auftragssuspension einen Feststoffgehalt von etwa 20 bis etwa 75 Gew.-% , bevorzugt von etwa 30 bis etwa 50 Gew.%, aufweist, und mit dem Curtain-Coating-Beschichtungsverfahren bei einer Betriebsgeschwindigkeit der Streichanlage von mindestens etwa 400 m/min, bevorzugt von mindestens etwa 1000 m/min, ganz besonders bevorzugt von mindestens etwa 1500 m/min, aufgetragen und getrocknet wird.

14. Wärmeempfindliches Aufzeichnungsmaterial, erhältlich gemäß dem Verfahren nach Anspruch 13.

15. Verwendung der Verbindung der Formel (A) nach mindestens einem der vorangegangenen Ansprüche, als nichtphenolischen Farbentwickler in einem wärmeempfindlichen Aufzeichnungsmaterial.

## Claims

1. Heat-sensitive recording material comprising a carrier substrate and a heat-sensitive colour-forming layer, which contains at least one colour former and at least one phenol-free colour developer, **characterised in that** the at least one colour developer is the compound of formula (A)

$$Ar(NH\text{-}CO\text{-}NH\text{-}CO\text{-}NH\text{-}Ar^1)_n \qquad (A),$$

wherein Ar is an unsubstituted or substituted phenyl or naphthyl group, Ar$^1$ is an unsubstituted or substituted phenyl, naphthyl, pyridyl, thiazolyl or benzothiazolyl group, and n is 1 or 2.

2. Heat-sensitive recording material according to claim 1, **characterised in that** Ar is a phenyl group substituted with a $C_1$-$C_4$ alkyl group, an alkenyl group, an alkynyl group, a benzyl group, a halogen group, an $NO_2$ group, a CN group, a formyl group, an ROC group, an RO group, an $RO_2C$ group, an ROCO group, an R-$SO_2$O group, an RO-$SO_2$ group, an RNHCO group, an RCONH group, an R-NH-$SU_2$ group, or an R-$SO_2$-NH group, wherein R is a $C_1$-$C_4$ alkyl group, an alkenyl group, an alkynyl group, a phenyl group, a tolyl group, or a benzyl group.

3. Heat-sensitive recording material according to at least one of the preceding claims, **characterised in that** Ar is an unsubstituted phenyl group, a 4-acetyl-phenyl group, a 3-chlorophenyl group, or a 4-methoxy-phenyl group.

4. Heat-sensitive recording material according to at least one of the preceding claims, **characterised in that** Ar$^1$ is a

phenyl group substituted with a $C_1$-$C_4$ alkyl group, an alkenyl group, an alkynyl group, a benzyl group, a halogen group, an $NO_2$ group, a CN group, a formyl group, an $R^1OC$ group, an $R^1O$ group, an $R^1O_2C$ group, an $R^1OCO$ group, an $R^1$-$SO_2O$ group, an $R^1O$-$SO_2$ group, an $R^1NHCO$ group, an $R^1CONH$ group, an $R^1$-NH-$SO_2$ group, or an $R^1$-$SO_2$-NH group, wherein is a $C_1$-$C_4$ alkyl group, an alkenyl group, an alkynyl group, a phenyl group, a tolyl group, a benzyl group, a thiazolyl group, a benzothiazolyl group, or a pyrimidyl group.

5. Heat-sensitive recording material according to at least one of the preceding claims, **characterised in that** $Ar^1$ is a phenyl group preferably substituted in the 3- or 4-position with an $R^1O$-$SO_2$ group or an $R^1$-$SO_2O$ group.

6. Heat-sensitive recording material according to at least one of the preceding claims, **characterised in that** the at least one colour former is a dye of the triphenylmethane type, of the fluoran type, of the azaphthalide type and/or of the fluorene type, preferably of the fluoran type.

7. Heat-sensitive recording material according to at least one of the preceding claims, **characterised in that** the compound of formula (I) is present in an amount of from about 3 to about 35% by weight, preferably in an amount of from about 10 to about 25% by weight, in relation to the total solids content of the heat-sensitive layer.

8. Heat-sensitive recording material according to at least one of the preceding claims, **characterised in that** the heat-sensitive colour-forming layer comprises at least one sensitising agent.

9. Heat-sensitive recording material according to at least one of the preceding claims, **characterised in that** the heat-sensitive colour-forming layer contains additives, such as stabilisers, binders, release agents, pigments and/or brighteners.

10. Heat-sensitive recording material according to at least one of the preceding claims, **characterised in that** the applied weight per unit are of the (dry) heat-sensitive layer is about 1 to about 10 $g/m^2$, preferably about 3 to about 6 $g/m^2$.

11. Heat-sensitive recording material according to at least one of the preceding claims, **characterised in that** the dried heat-sensitive colour-forming layer is subjected to a smoothing measure in such a way that it has a Bekk smoothness, measured according to ISO 5627: 1995, of from about 100 to about 1000 sec.

12. Heat-sensitive recording material according to at least one of the preceding claims, **characterised in that** at least one further intermediate layer is present between the carrier substrate and the heat-sensitive colour-forming layer and preferably contains organic hollow sphere pigments and/or calcined kaolins.

13. Method for producing a heat-sensitive recording material according to at least one of claims 1 to 14, wherein an aqueous suspension containing the starting materials of the heat-sensitive colour-forming layer is applied to a carrier substrate and dried, the aqueous application suspension having a solids content of from about 20 to about 75% by weight, preferably from about 30 to about 50% by weight, and being applied and dried by the curtain coating process at an operating speed of the coating plant of at least about 400 m/min, preferably at least about 1000 m/min, very especially preferably at least about 1500 m/min.

14. Heat-sensitive recording material obtainable by the process according to claim 13.

15. Use of the compound of formula (A) according to at least one of the preceding claims as a non-phenolic colour developer in a heat-sensitive recording material.

**Revendications**

1. Matériau d'enregistrement thermosensible, comprenant un substrat de support et au moins une couche chromogène thermosensible contenant un révélateur chromogène non phénolique, **caractérisé en ce que** l'au moins un révélateur chromogène est le composé de la formule (A)

$$\mathbf{Ar\{NH\text{-}CO\text{-}NH\text{-}CO\text{-}NH\text{-}Ar^1)_n} \qquad \text{(A)},$$

dans laquelle Ar est un radical phényle ou naphtyle non substitué ou substitué, $Ar^1$ est un radical phényle, naphtyle, pyridyle, thiazolyle ou benzothiazolyle non substitué ou substitué et n est égal à 1 ou 2.

2. Matériau d'enregistrement thermosensible selon la revendication 1, **caractérisé en ce que** Ar est un radical phényle substitué par un radical alkyle $C_1$-$C_4$, un radical alcényle, un radical alcynyle, un radical benzyle, un radical halogène, un radical de $NO_2$, un radical CN, un radical formyle, un radical ROC, un radical RO, un radical $RO_2C$, un radical ROCO, un radical R-$SO_2$-O, un radical RO-$SO_2$, un radical RNHCO, un radical RCONH, un radical R-NH-$SO_2$ ou un radical R-$SO_2$-NH, dans lequel R est un radical alkyle $C_1$-$C_4$, un radical alcényle, un radical alcynyle, un radical phényle, un radical tolyle ou un radical benzyle.

3. Matériau d'enregistrement thermosensible selon au moins l'une quelconque des revendications précédentes, **caractérisé en ce que** Ar est un radical phényle non substitué, un radical 4-acétyle-phényle, un radical 3-chlorophényle ou un radical 4-méthoxy-phényle.

4. Matériau d'enregistrement thermosensible selon au moins l'une quelconque des revendications précédentes, **caractérisé en ce que** $Ar^1$ est un radical phényle substitué par un radical alkyle en $C_1$-$C_4$, un radical alcényle, un radical alcynyle, un radical benzyle, un radical halogène, un radical $NO_2$, un radical CN, un radical formyle, un radical $R^1OC$, un radical $R^1O$, un radical $R^1O_2C$, un radical $R^1OCO$, un radical $R^1$-$SO_2O$, un radical $R^1O$-$SO_2$, un radical $R^1NHCO$, un radical $R^1CONH$, un radical $R^1$-NH-$SO_2$ ou un radical $R^1$-$SO_2$-NH, dans lequel est un radical alkyle $C_1$-$C_4$, un radical alcényle, un radical alcynyle, un radical phényle, un radical tolyle, un radical benzyle, un radical thiazolyle, un radical benzothiazolyle ou un radical pyrimidyle.

5. Matériau d'enregistrement thermosensible selon au moins l'une quelconque des revendications précédentes, **caractérisé en ce que** $Ar^1$ est un radical phényle substitué de préférence en position 3 ou 4 par un radical $R^1O$-$SO_2$ ou un radical $R^1$-$SO_2O$.

6. Matériau d'enregistrement thermosensible selon au moins l'une quelconque des revendications précédentes, **caractérisé en ce que** l'au moins un agent chromogène est un colorant de type triphénylméthane, de type fluorane, de type azaphtalide et/ou de type fluorène, de manière préférée de type fluorane.

7. Matériau d'enregistrement thermosensible selon au moins l'une quelconque des revendications précédentes, **caractérisé en ce que** le composé de la formule (I) est présent en une quantité d'environ 3 à environ 35 % en poids, de manière préférée en une quantité d'environ 10 à environ 25 % en poids, par rapport à la teneur totale en matières sèches de la couche thermosensible.

8. Matériau d'enregistrement thermosensible selon au moins l'une quelconque des revendications précédentes, **caractérisé en ce que** la couche chromogène thermosensible comprend au moins un agent de sensibilisation.

9. Matériau d'enregistrement thermosensible selon au moins l'une quelconque des revendications précédentes, **caractérisé en ce que** la couche chromogène thermosensible contient des additifs, comme des agents stabilisants, des liants, des agents de séparation, des pigments et/ou des azurants.

10. Matériau d'enregistrement thermosensible selon au moins l'une quelconque des revendications précédentes, **caractérisé en ce que** le poids d'application surfacique de la couche thermosensible va d'environ 1 à environ 10 $g/m^2$, de manière préférée d'environ 3 à environ 6 $g/m^2$.

11. Matériau d'enregistrement thermosensible selon au moins l'une quelconque des revendications précédentes, **caractérisé en ce que** la couche chromogène thermosensible séchée est soumise de telle manière à une action de lissage qu'elle présente un lissé Bekk, mesuré selon la norme ISO 5627:1995, d'environ 100 à environ 1000 sec.

12. Matériau d'enregistrement thermosensible selon au moins l'une quelconque des revendications précédentes, **caractérisé en ce qu'**au moins une autre couche intermédiaire est présente entre le substrat de support et la couche chromogène thermosensible, qui contient de préférence des pigments sphériques creux organiques et/ou des kaolins calcinés.

13. Procédé de fabrication d'un matériau d'enregistrement thermosensible selon au moins l'une quelconque des revendications 1 à 12, dans lequel une suspension aqueuse contenant les matériaux de départ de la couche chromogène thermosensible est appliquée et séchée sur un substrat de support, dans lequel la suspension d'application aqueuse présente une teneur en matières sèches d'environ 20 à environ 75 % en poids, de manière préférée d'environ 30 à environ 50 % en poids, et est appliquée et séchée avec le procédé de revêtement en rideau à une vitesse de fonctionnement de la coucheuse d'au moins environ 400 m/min, de manière préférée d'au moins environ

1000 m/min, de manière très particulièrement préférée d'au moins environ 1500 m/min.

**14.** Matériau d'enregistrement thermosensible pouvant être obtenu selon le procédé selon la revendication 13.

**15.** Utilisation du composé de la formule (A) selon au moins l'une quelconque des revendications précédentes, en tant que révélateur chromogène non phénolique dans un matériau d'enregistrement thermosensible.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0526072 A1
- EP 0620122 B1
- WO 0035679 A1
- JP 11263769 A
- JP 05185737 B
- JP H10217613 A
- DE 10196052 T1


### In der Beschreibung aufgeführte Nicht-Patentliteratur


- **R. C. MOSCHEL ; W. R. HUDGINS ; A. DIPPLE.** *J. Org. Chem.,* 1986, vol. 51 (22), 4180
- **M. M. AL SABBAGH ; M. CALMON ; J. P. CALMON.** *Bull. Soc. Chim. Fr.,* 1983, vol. 3-4 (2), 73
- **F. H. S. CURD ; D. G. DAVEY ; D. N. RICHARDSON.** *J. Chem. Soc.,* 1949, 1732